(19) Europäisches Patentamt
European Patent Office
Office européen des brevets

(11) Veröffentlichungsnummer : **0 037 986**
**B1**

(12) # EUROPÄISCHE PATENTSCHRIFT

(45) Veröffentlichungstag der Patentschrift : **11.05.83**

(51) Int. Cl.³ : **C 09 B 62/10**

(21) Anmeldenummer : **81102519.6**

(22) Anmeldetag : **03.04.81**

(54) **Verfahren zur Herstellung von Phthalocyaninfarbstoffen.**

(30) Priorität : **16.04.80 DE 3014661**

(43) Veröffentlichungstag der Anmeldung : **21.10.81 Patentblatt 81/42**

(45) Bekanntmachung des Hinweises auf die Patenterteilung : **11.05.83 Patentblatt 83/19**

(84) Benannte Vertragsstaaten : **CH DE FR GB IT LI**

(56) Entgegenhaltungen :
**CH A 473 878**
**DE A 2 208 475**
**FR A 2 022 724**
**GB A 1 028 811**

(73) Patentinhaber : **BAYER AG**
**Zentralbereich Patente, Marken und Lizenzen**
**D-5090 Leverkusen 1, Bayerwerk (DE)**

(72) Erfinder : **Groll, Manfred, Dr.**
**Haferkamp 6**
**D-5000 Köln 80 (DE)**
Erfinder : **Duchardt, Karl Heinz, Dr.**
**Gerstenkamp 21**
**D-5000 Köln 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 037 986 B1

Jouve, 18, rue St-Denis, 75001 Paris, France

Verfahren zur Herstellung von Phthalocyaninfarbstoffen

Die Erfindung betrifft ein neues Verfahren zur Herstellung von wasserlöslichen Phthalocyaninfarbstoffen, die in Form ihrer freien Säuren der Formel

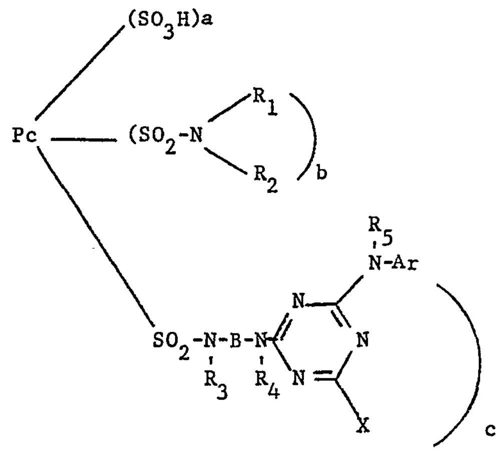

(I)

entsprechen, worin

Pc = Rest eines Kupfer- oder Nickel-Phthalocyanins

$R_1$, $R_2$ = Wasserstoff, gegebenenfalls substituiertes Alkyl oder worin $R_1$ und $R_2$ zusammen mit dem durch sie eingeschlossenen Stickstoffatome einen fünfoder sechsgliedrigen heterocyclischen Ring bilden

und worin

$R_3$, $R_4$, $R_5$ = Wasserstoff oder gegebenenfalls substituiertes Alkyl,

Ar = durch mindestens eine —$SO_3H$ und/oder COOH-Gruppe und gegebenenfalls zusätzlich durch Alkyl ($C_1$-$C_4$), Alkoxy ($C_1$-$C_6$), Halogen, Cyan, Nitro, Carbamoyl, Ureido ein- oder mehrfach substituiertes Phenyl oder Naphthyl,

B = gegebenenfalls substituiertes und mindestens einen aromatischen Rest enthaltendes Brückenglied,

X = Halogen,

a = 1 bis 3,

b = 0 bis 2,

c = 1 oder 2

und wobei die Summe (a + b + c) die Zahl 4 nicht übersteigen soll und von deren Mischungen.

Bischer bekannt gewordene Verfahren zur Herstellung von Farbstoffen der allgemeinen Formel I bzw. von ähnlich strukturierten Phthalocyanin-Farbstoffen beinhalten alle einen Mehrstufenprozeß.

Siehe z. B.

1) DE-A 2 208 475, wo das isolierte nicht-reaktivgruppenhaltige Phthalocyaninderivat mit der Reaktivkomponente X-Z unter Abspaltung von H-X umgesetzt wird.

2) FR-A 2 022 724, wo eine dem obigen Verfahren 1) analoge Umsetzung durchgeführt wird.

3) GB-A 1 028 811, deren Herstellungsverfahren ebenfalls den unter 1) und 2) genannten entspricht, wobei hier nach dem Umsatz mit dem Cyanurhalogenid gegebenenfalls noch eine Reaktion mit Ammoniak oder organischen primären oder sekundären Aminen folgt.

4) CH-A 473 878, wo eine wäßrige Suspension eines Phthalocyaninsulfochlorids mit dem getrennt hergestellten, bereits das bifunktionell Diamino-Brückenglied tragende Halogentriazino-Reaktivsystem umgesetzt wird. Siehe dazu Spalte 3, Zeile 39 bis Spalte 4, Zeile 25.

5) Als im Hinblick auf das vorliegende Verfahren nächster Stand der Technik ist US-A 4 267 107 zu bezeichnen, wo identische Farbstoffe ebenfalls im Sinne einer Mehrstufenreaktion unter Isolierung von Zwischenstufen hergestellt werden. Dieses Herstellungsverfahren beruht in Analogie zu den unter 1) bis 3) genannten, auf einer Umsetzung mit der Reaktivkomponente. Vergleiche dazu u. a. das Beispiel 1 von US-A 4 267 107.

Im Hinblick auf diesen Stand der Technik, der immer von Mehrstufenverfahren ausgeht, war es überraschend, daß die Farbstoffe der Formel I im sogenannten « Eintopfverfahren », d. h. ohne Isolierung von Zwischenstufen zugänglich waren. So sollte beispielsweise die Reaktionsstufe der Umsetzung mit dem Diamin (III) zumal bei überschüssigem Diamin in Konkurrenz treten mit der Umsetzung mit dem Triazin (V) und dabei die für die jeweiligen Substituenten vorgesehenen Bindungsstellen blockieren. Umso überraschender ist es, daß im Gegenteil die nach dem erfindungsgemäßen Verfahren hergestellten Farbstoffe in reinerer Form (d. h. praktisch ohne Nebenprodukte) anfallen und für das Druckverfahren besser geeignet sind als die identischen nach dem Mehrstufenverfahren gemäß US-A 4 267 107 hergestellten Farbstoffen.

Es wurde gefunden, daß man Farbstoffe der Formel (I), in welcher die Substituenten $R_1$ bis $R_5$, B, X, Ar und Pc die oben angegebene Bedeutung haben, ohne Isolierung von Zwischenstufen erhält, wenn man nacheinander Trihalogentriazine der Formel

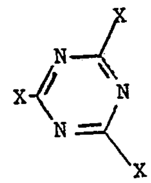

(II)

worin X die oben angegebene Bedeutung hat, zunächst mit einem Mol eines Amins der Formel

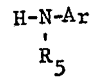

(III)

worin Ar und $R_5$ die oben angegebene Bedeutung haben, dann mit einem Mol Diamin der Formel

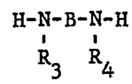

(IV)

worin B, $R_3$ und $R_4$ die oben angegebene Bedeutung haben, umsetzt und hierauf das erhaltene Zwischenprodukt ohne Isolierung, gegebenenfalls zusammen mit einem Amin der Formel

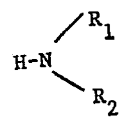

(V)

worin $R_1$ und $R_2$ die oben angegebene Bedeutung haben, mit einem Phthalocyanin-sulfochlorid der Formel

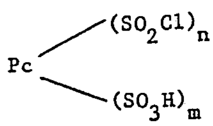

(VI)

worin Pc die oben angegebene Bedeutung besitzt,
m für 0 bis 2 und
n für 1 bis 4 steht,
wobei die Summe (m + n) die Zahl 4 nicht übersteigen soll, umsetzt und die Reaktionsprodukte, deren freie Säuren der Formel (I) entsprechend, nach an sich bekannten Methoden isoliert.

Farbstoffe der Formel (I) konnten bislang nur durch einen mehrstufigen und unter Isolierung von Zwischenstufen erfolgenden Herstellungsprozeß erhalten werden. (Siehe dazu u. a. DE-A 2 556 640, DE-A 2 650 555).

Die Herstellung von Verbindungen der Formel (I) erfolgte bisher durch Umsetzung von Verbindungen der Formel

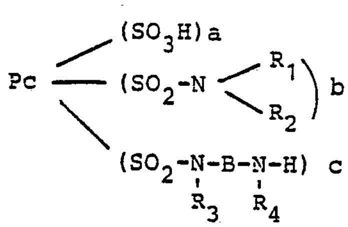

worin $R_1$ bis $R_4$, B sowie a, b und c die oben angegebene Bedeutung haben, entweder mit Verbindungen der Formel

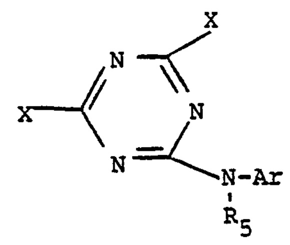

worin Ar, $R_5$ und X die oben angegebene Bedeutung besitzen, oder alternativ zunächst mit 2,4,6-Trihalogen-Triazin und anschließend mit Verbindungen der Formel

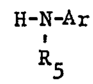

worin Ar und $R_5$ die oben angegebene Bedeutung haben.

Es ist deshalb als außergewöhnlich überraschend anzusehen, daß man Verbindungen der Formel (I) in einfacher Art und Weise, ohne Isolierung von Zwischenstufen und in hoher Reinheit mit Hilfe einer Eintopfreaktion erhalten kann.

Der glatte Reaktionsablauf dieser Synthese, ausgehend von Kupfer- bzw. Nickel-phthalocyanin-sulfochlorid-sulfonsäuren oder von Kupfer- bzw. Nickel-phthalocyaninsulfonsäurechloriden der Formel (VI), war keineswegs zu erwarten und muß als überraschend bezeichnet werden.

In den Farbstoffen der Formel (I) ist jede Sulfonsäure- bzw. Sulfonsäureamidgruppe an einen anderen Benzolring des Phthalocyanins in 3- oder 4-Stellung gebunden.

Die Reste $R_1$ und $R_2$ und $R_3$, $R_4$, $R_5$ können gleich oder verschieden sein.

Als gegebenenfalls substituiertes Alkyl $R_1$, $R_2$ und gegebenenfalls substituiertes Alkyl $R_3$, $R_4$, $R_5$ steht vorzugsweise gegebenenfalls durch OH, COOH oder $SO_3H$ substituiertes Alkyl ($C_1$-$C_5$), als Beispiele seien genannt : Methyl, Ethyl, Propyl, Butyl, Amyl, β-Hydroxyethyl, α-Hydroxypropyl, β-Carboxyethyl, β-Sulfoethyl.

Als Beispiele dafür, daß

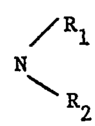

für einen fünf- oder sechsgliedrigen heterocyclischen Ring steht, seien genannt : Piperidino, Morpholino, Pyrrolidino, Succinimido.

Die gegebenenfalls substituierten und mindestens einen aromatischen Rest enthaltenden Brückenglieder B können aromatischer oder araliphatischer Natur sein. Sie können beispielsweise durch Alkyl ($C_1$-$C_4$), Alkoxy ($C_1$-$C_4$), Halogen, $SO_3H$, COOH substituiert oder z. B. durch —CO, —SO—, —NH—CO—NH—, —$SO_2$NH—, —NH—, —O—Funktionen unterbrochen sein.

Als Beispiele aromatischer Brückenglieder seien genannt : 1,2-Phenylen, 1,3-Phenylen, 1,4-Phenylen, 1,4-Naphthylen, 1,5-Naphthylen, 4-Methyl-1,4-phenylen, 2-Methyl-1,4-phenylen, 2-Methyl-5-chlor-1,4-phenylen, 4-Methoxy-1,3-phenylen, 3-Methoxy-1,4-phenylen, 4-Chlor-1,3-phenylen, 2-Chlor-1,4-phenylen, 5-Carbonamido-1,3-phenylen, 2-Carboxy-1,4-phenylen, 2-Carboxy-1,5-phenylen, 3-Carboxy-1,5-phenylen, 4-Sulfo-1,3-phenylen, 3-Sulfo-1,4-phenylen, 2-Methyl-5-sulfo-1,3-phenylen.

Weitere Beispiele für Brückenglieder B sind :

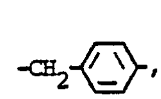, 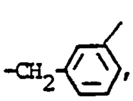, 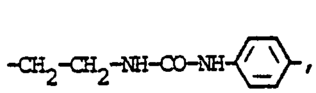, 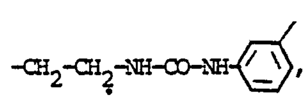,

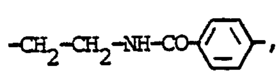, 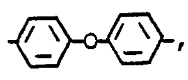, 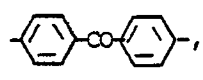, 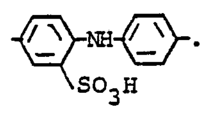.

Halogen X steht vorzugsweise für Fluor und Chlor.

Eine bevorzugte Gruppe innerhalb der erfindungsgemäß hergestellten Farbstoffe sind solche der allgemeinen Formel (I), wobei

Pc = Rest eines Kupfer- oder Nickelphthalocyanins

$R_1$, $R_2$, $R_3$, $R_4$ = Wasserstoff, Methyl oder Ethyl,
$R_5$ = Wasserstoff,
B = gegebenenfalls durch Alkyl ($C_1$-$C_4$) Alkoxy ($C_1$-$C_4$) oder Halogenatome substituiertes 1,3-Phenylen oder 1,4-Phenylen,
X = Fluor oder Chlor
Ar = gegebenenfalls durch Halogen, Methyl, Ethyl, Methoxy, substituiertes Phenyl oder Naphthyl, das durch mindestens eine $SO_3H$- oder COOH-Gruppe substituiert ist.
a = 1-3
b = 0-2
c = 1
und (a + b + c) = 2-4.

Eine besonders bevorzugte Gruppe innerhalb der erfindungsgemäß hergestellten Farbstoffe sind solche der allgemeinen Formel (I), wobei
Pc = Rest eines Kupfer- oder Nickelphthalocyanins,
$R_1$, $R_2$, $R_3$, $R_4$ = Wasserstoff, Methyl oder Ethyl
$R_5$ = Wasserstoff
B = gegebenenfalls durch Alkyl ($C_1$-$C_4$)-Alkoxy ($C_1$-$C_4$) oder Halogenatome substituiertes 1,3-Phenylen oder 1,4-Phenylen,
X = Fluor oder Chlor,
Ar = gegebenenfalls durch Halogen, Methyl, Ethyl, Methoxy, $SO_3H$ substituierter Phenylrest, der durch mindestens eine $SO_3H$-Gruppe in meta- oder para-Stellung zur $NR_5$-Gruppe substituiert ist.
a = 1-3
b = 0-2
c = 1-2
(a + b + c) = 2-4.

Zur Herstellung der Farbstoffe der Formel I nach dem erfindungsgemäßen Verfahren setzt man zunächst ca. 1 Mol 2,4,6-Trifluor-triazin bzw. 2,4,6-Trichlortriazin mit ca. einem Mol einer Verbindung der Formel

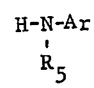

(III)

vorzugsweise bei pH 2.5 bis 4.5 (insbesondere pH 3-4) und bei − 5 bis + 10 °C (insbesondere 0-5 °C) zu einer Verbindung der Formel

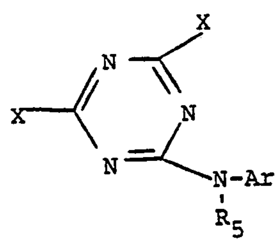

(VII)

um, gibt anschließend vorzugsweise bei pH 3,5-6,0 (insbesondere pH 4,0-4,5) und − 5 bis + 6 °C (insbesondere 0-3 °C) die etwa äquimolare Menge einer Verbindung der Formel

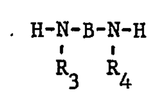

(IV)

zu, und nach Bildung der Verbindung

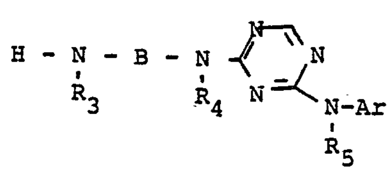

(VIII)

das Phthalocyaninsulfonsäurechlorid der Formel

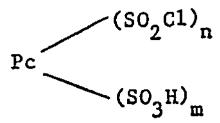

(VI)

worin m und n die oben angegebene Bedeutung haben, vorzugsweise bei pH 3,5-5,5 (insbesondere bei pH 4-5) und bei − 5 bis + 30 °C (insbesondere bei 0-5 °C) und gegebenenfalls ein Amin der Formel

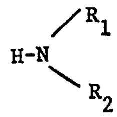

(V)

zu.

Anschließend läßt man die Reaktionsteilnehmer vorzugsweise bei einem pH-Wert von 6 bis 11 (insbesondere 9 bis 10) und vorzugsweise bei Temperaturen zwischen 0° und 30 °C unter Bildung der Verbindungen der Formel (I) miteinander reagieren und isoliert den gebildeten Farbstoff durch Aussalzen und Absaugen.

Die Umsetzungen finden vorzugsweise in wäßrigem Medium und bei Temperaturen zwischen − 5 °C und + 30 °C statt.

Als Beispiele für Ausgangsverbindungen der Formel (III) seien genannt :

Anilin-2-sulfonsäure, Anilin-3-sulfonsäure, Anilin-4-sulfonsäure, Anilin-2,4-disulfonsäure, Anilin-2,5-disulfonsäure, 2-Amino-4-chlorbenzolsulfonsäure, 2-Amino-5-chlorbenzolsulfonsäure, 2-Amino-3,5-dichlorbenzolsulfonsäure, 3-Amino-4-chlorbenzolsulfonsäure, 5-Amino-2-chlorbenzolsulfonsäure, 4-Amino-3-chlorbenzolsulfonsäure, 4-Amino-2,5-dichlorbenzolsulfonsäure, 4-Amino-2-nitrobenzolsulfonsäure, 5-Amino-2-nitrobenzolsulfonsäure, 5-Amino-2-methylbenzolsulfonsäure, 4-Amino-2-methylbenzolsulfonsäure, 2-Amino-5-methylbenzolsulfonsäure, 4-Amino-3-methylbenzolsulfonsäure, 4-Amino-3-chlor-5-methylbenzolsulfonsäure, 3-Amino-4-methylbenzolsulfonsäure, 3-Amino-4-methyl-5-nitrobenzolsulfonsäure, 2-Amino-5-chlor-4-methylbenzolsulfonsäure, 5-Amino-2,4-dimethylbenzolsulfonsäure, 2-Amino-3,5-dimethylbenzolsulfonsäure, 2-Amino-1-naphthalinsulfonsäure, 4-Amino-1-naphthalin-sulfonsäure, 5-Amino-1-naphthalinsulfonsäure, 6-Amino-1-naphthalin-sulfonsäure, 7-Amino-2-naphthalinsulfonsäure, 8-Amino-2-naphthalin-sulfonsäure, 7-Methylamino-2-naphthalinsulfonsäure, 4-Amino-5-methyl-1,3-benzoldisulfonsäure, 5-Amino-1,3-naphthalindisulfonsäure, 5-Amino-2-methoxy-benzolsulfonsäure, 5-Amino-2-ethoxybenzolsulfonsäure, 2-Amino-5-methoxybenzolsulfonsäure, 2-Amino-5-ethoxybenzolsulfonsäure, 3-Amino-4-methoxybenzolsulfonsäure, 3-Aminobenzoesäure, 2-Aminobenzoesäure, 4-Aminobenzoesäure, 2-Amino-4-chlorbenzoesäure, 5-Amino-2-chlorbenzoesäure, 4-Amino-2-nitrobenzoesäure, 3-Amino-4-methyl-benzoesäure, 5-Amino-isophthalsäure, 4-Amino-1,8-naphthalindicarbonsäure, 3-Amino-4-methoxybenzoesäure.

Als Beispiele für Ausgangsverbindungen der Formel (IV) seien genannt : 1,3-Diaminobenzol, 1,4-Diaminobenzol, 4-Chlor-1,2-diaminobenzol, 4-Chlor-1,3-diaminobenzole, 4-Nitro-1,3-diaminobenzol, 4-Amino-methylanilin, 4,4′-Diamino-diphenylamin, 2-Chlor-1,3-diaminobenzol, 2-Nitro-1,4-diaminobenzol, 1,3-Diamino-4-methylbenzol, 1-Amino-3-ethylamino-4- methylbenzol, 1,4-Diamino-2-methylbenzol, 1,3-Diamino-2-methylbenzol, 1,4-Diaminonaphthalin, 1,5-Diamino-naphthalin, 4,4′-Diaminodiphenyl, 4,4′-Diamino-3-methylbiphenyl, 4,4′-Diaminodiphenylether, 1,3-Diamino-4-methoxybenzol, 1,4-Diamino-2-methoxybenzol, 2,4-Diamino-benzoesäure, 2,5-Diaminobenzoesäure, 1,3-Bisaminomethylbenzol, 1,3-Bis-aminomethyl-4,6-dimethylbenzol.

Als Beispiele für Amine der Formel (V) seien genannt: Methylamin, Ethylamin, Propylamin, Oxyethylamin, Dimethylamin, Diethylamin, Methyl-ethylamin, Pyrrolidin, Piperidin, Morpholin und insbesondere Ammoniak.

Phthalocyaninsulfochloride bzw. Phthalocyaninsulfochlorid-sulfonsäuren der Formel (VI) können dadurch erhalten werden, daß man das entsprechende Phthalocyanin oder die Phthalocyaninsulfonsäure mit Chlorsulfonsäure und gegebenenfalls einem Säurehalogenid, wie Thionylchlorid, Phosphorpentachlorid, Phosphoroxychlorid oder Phosphortrichlorid wie in den britischen Patentschriften GB-A-708 543, 784 834 und 785 629 und in der US-Patentschrift US-A-2 219 330 beschrieben, behandelt.

Erfindungsgemäß können einheitliche Phthalocyaninfarbstoffe hergestellt werden, das sind solche, in denen die Buchstaben a, b, und c die Zahlen 0, 1, 2 bzw. 3 charakterisieren. Darüber hinaus können aber auch Gemische dieser Farbstoffe hergestellt werden. Bisweilen zeigen derartige Gemische bezüglich Löslichkeit und Substantivität besondere Vorteile. In solchen Mischungen variieren die Zahlen im gemittelten Wert.

Derartige erfindungsgemäß hergestellten Gemische werden beispielsweise aus zwei oder mehreren, jeweils einheitlichen Endfarbstoffen der Formel (I) oder besonders vorteilhaft durch Verwendung eines Gemisches der Ausgangskomponenten hergestellt. Letzteres entsteht häufig zwangsläufig, da die Phthalocyaninsulfonsäurechlorid-sulfonsäuren (VI) bezüglich Sulfierungsgrad und ihres Verhältnisses von Sulfonsäurechloridgruppen und Sulfonsäuregruppen häufig technisch als Gemische anfallen.

Die nach dem erfindungsgemäßen Verfahren hergestellten Farbstoffe sind äußerst wertvolle Produkte, die sich für verschiedenste Anwendungszwecke eignen. Als wasserlösliche Verbindungen finden sie Interesse für das Färben hydroxylgruppenhaltiger und stickstoffhaltiger Textilmaterialien, insbesondere von Textilmaterialien aus nativer und regenerierter Cellulose, ferner aus Wolle, Seide, synthetischen Polyamid- und Polyurethanfasern. Sie eignen sich besonders als Reaktivfarbstoffe zum Färben von Cellulosematerialien nach den hierfür in neuerer Zeit bekanntgewordenen Techniken. Die erhaltenen Echtheiten, insbesondere Naßechtheiten, sind ausgezeichnet.

Zum Färben von Cellulose werden die Farbstoffe vorzugsweise in einer wäßrigen Lösung eingesetzt, die mit alkalisch reagierenden Stoffen, wie Alkalihydroxyd oder Alkalicarbonat, oder mit in alkalisch reagierende Stoffe übergehenden Verbindungen, wie Alkalibicarbonat, $Cl_3C$-COONa, versetzt werden kann. Der Lösung können weitere Hilfsmittel zugesetzt werden, die jedoch mit den Farbstoffen nicht in unerwünschter Weise reagieren sollen. Solche Zusätze sind beispielsweise oberflächenaktive Substanzen, wie Alkylsulfate, oder die Wanderung des Farbstoffes verhindernde Stoffe oder Färbereihilfsprodukte, wie Harnstoff, oder indifferente Verdickungsmittel, wie Öl-Wasser-Emulsionen, Traganth, Stärke, Alginat oder Methylcellulose.

Die so hergestellten Lösungen oder Pasten werden auf das zu färbende Material beispielsweise durch Aufklotzen im Foulard (kurze Flotte) oder durch Aufdrucken aufgebracht und anschließend einige Zeit auf erhöhte Temperatur, vorzugsweise 40 bis 150 °C, erhitzt. Das Erhitzen kann in der Hotflue, im Dämpfapparat, auf erhitzten Walzen oder durch Einbringen in erhitzte konzentrierte Salzbäder sowohl für sich allein als auch in beliebiger Reihenfolge hintereinander ausgeführt werden.

Bei Verwendung einer Klotz- oder Färbeflotte ohne Alkali wird eine Passage der trockenen Ware durch eine alkalisch reagierende Lösung, der Kochsalz oder Glaubersalz zugesetzt wird, angeschlossen. Der Salzzusatz vermindert hierbei das Abwandern des Farbstoffes von der Faser.

Man kann ebenfalls das zu färbende Material mit einem der vorgenannten säurebindenden Mittel vorbehandeln, anschließend mit der Lösung oder Paste des Farbstoffs behandeln und schließlich, wie angegeben, bei erhöhter Temperatur fixieren.

Zum Färben aus langer Flotte geht man in eine wäßrige Lösung des Farbstoffs (Flottenverhältnis 1 : 5 bis 1 : 40) bei Raumtemperatur ein und färbt 40 bis 90 Minuten, gegebenenfalls unter Erhöhung der Temperatur bis auf 95 °C und gegebenenfalls unter anteilweiser Zugabe von Salz, z. B. Natriumsulfat, und anschließend Alkali, beispielsweise Natriumphosphaten, Natriumcarbonat, NaOH oder KOH.

Hierbei tritt die chemische Reaktion zwischen Farbstoff und Faser ein. Nach erfolgter chemischer Fixierung wird das Färbegut heiß gespült und abschließend geseift, wobei nicht fixierte Reste des Farbstoffs entfernt werden. Man erhält ausgezeichnet echte, insbesondere naß- und lichtechte Färbungen.

Im sogenannten Klotz-Kaltverweil-Verfahren läßt sich eine nachträgliche Erhitzung des geklotzten Gewebes dadurch ersparen, daß man das Gewebe einige Zeit, z. B. 2 bis 20 Stunden, bei Raumtemperatur lagert. In diesem Verfahren wird ein stärkeres Alkali als bei dem oben beschriebenen Färbeverfahren aus langer Flotte eingesetzt.

Zum Bedrucken von Hydroxylgruppen enthaltenden Materialien wird eine Druckpaste aus der Farbstofflösung, einem Verdickungsmittel, wie Natriumalginat, und einer alkalisch reagierenden oder beim Erhitzen Alkali abspaltenden Verbindung, wie Natriumcarbonat, Natriumphosphat, Kaliumcarbonat, Kaliumacetat oder Natrium- und Kaliumhydrogencarbonat, verwendet und das bedruckte Material gespült und geseift.

Amidgruppen enthaltende Textilmaterialien, wie Wolle, Seide, synthetische Polyamid- und Polyurethanfasern, werden im allgemeinen nach den hierfür üblichen Färbemethoden in saurem bis neutralem Bereich gefärbt. Die mit den erfindungsgemäß hergestellten Farbstoffen erhältlichen Färbungen zeichnen sich im allgemeinen durch gute bis sehr gute Echtheitseigenschaften, insbesondere durch vorzügliche Naßechtheiten aus.

## Beispiel 1

In 110 ml Wasser und 10 ml 4 %iger Natronlauge werden 7,3 g Metanilsäure suspendiert. Man läßt unter gutem Rühren bei 0°-3 °C in 15 Minuten 3,4 ml (= 5,15 g) 2,4,6-Trifluor-1,3,5-triazin zutropfen und hält hierbei den pH-Wert der entstehenden Lösung durch Zugabe von Sodalösung bei 3.2 bis 3.8. Die Lösung wird 10 Minuten bei 0°-3 °C nachgerührt.

Nun läßt man innerhalb 10 Minuten eine Lösung von 2,6 g Phenylendiamin-1,3 in 50 ml Wasser und 21 ml 1n-Salzsäure zu obiger Lösung zulaufen, stellt den pH-Wert mit Sodalösung auf 4,5 und rührt bei diesem pH-Wert 2 Stunden bei 0°-3 °C.

In diese Amin-Lösung wird bei 0°-3 °C eine wäßrige Paste von 2/100 Mol Kupferphthalocyanin-(3, 3′, 3″, 3‴)-tetrasulfonsäurechlorid-sulfonsäure (enthaltend etwa eine $SO_3H$-Gruppe) eingetragen. Hierauf rührt man 30 ml einer 1n-$NH_3$-Lösung ein und stellt den pH-Wert mit Natronlauge auf 10,0 ein. Man rührt anfangs bei 0°-5 °C, später bei 20°-25 °C bis zur Beendigung der Reaktion. Man salzt den Farbstoff in einem pH-Bereich von 6 bis 9 aus, saugt ab und wäscht kurz mit verdünnter NaCl- oder KCl-Lösung. Nach Vermischen mit etwas Phosphat-Puffer (pH etwa 6,8) wird bei 50°-60° getrocknet. Man erhält in sehr guter Ausbeute den Farbstoff, der in Form seiner freien Säure der Formel

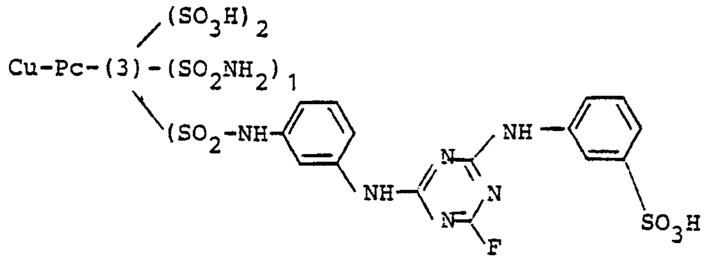

entspricht. Er färbt Baumwolle in klaren türkisblauen Tönen von ausgezeichneten Echtheiten.

Das in Absatz 3 genannten Kupferphthalocyanin-Derivat wird durch Behandeln von Kupferphthalocyanin mit Chlorsulfonsäure und etwas Thionylchlorid bei 139 °C erhalten. Zur Isolierung wird die Chlorsulfonsäure-Schmelze auf Eis ausgetragen, das Kupferphthalocyanin-Derivat abgesaugt und mit eiskalter etwa 1 %iger Salzsäure gewaschen.

Verfährt man analog Beispiel 1 und ersetzt die in Absatz 1 genannte Metanilsäure durch die in Spalte C* genannte Verbindung Ar—$NH_2$, das in Absatz 2 genannte Phenylendiamin-1,3 durch die in Spalte B* der nachfolgenden Tabelle aufgeführte Verbindung

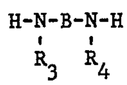

sowie die in Absatz 3 genannte Kupferphthalocyaninsulfochloridsulfonsäure durch die in Spalte A* der nachfolgenden Tabelle aufgeführte Verbindung des Typus

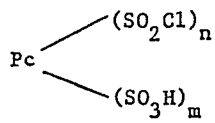

so erhält man in allen Fällen Phthalocyanin-Derivate der allgemeinen Formel

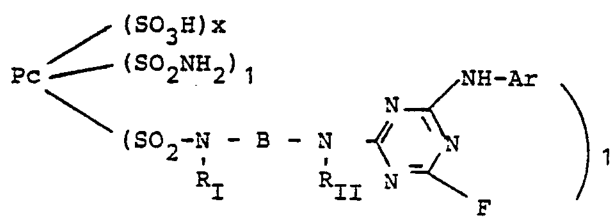

wobei

$R_I$ und $R_{II}$ = Wasserstoff oder $CH_3$,

X = 1-2

die Baumwolle ebenfalls in türkisblauen Tönen mit ausgezeichneten Echtheiten färben.

(Siehe die Tabelle, Seite 9 und 10)

| Beispiel | A* | B* $(R_IHN-B-NHR_{II})$ | C* $(Ar-NH_2)$ | Farbton |
|---|---|---|---|---|
| 2 | 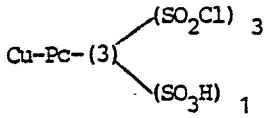 | 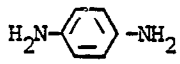 | 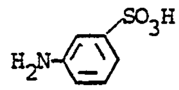 | türkis-blau |
| 3 | " | 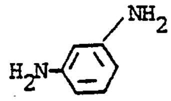 | 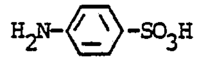 | " |
| 4 | " | 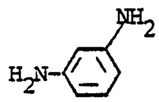 | 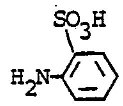 | " |
| 5 | " | 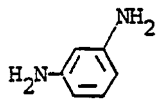 | 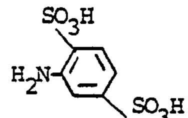 | " |
| 6 | " | 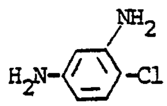 | 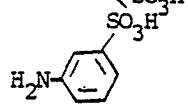 | " |
| 7 | " | 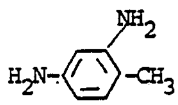 | 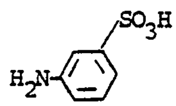 | " |
| 8 | " | 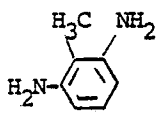 | 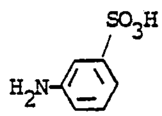 | " |
| 9 | " | 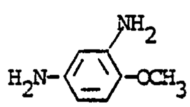 | 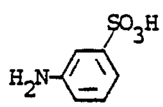 | türkis |
| 10 | " | 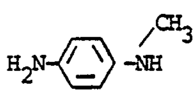 | 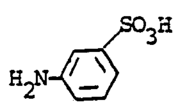 | türkis-blau |
| 11 | " | 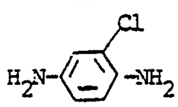 | 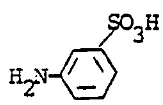 | türkis |
| 12 | " | 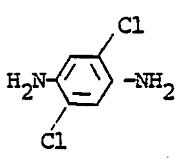 | 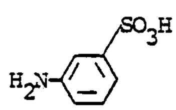 | " |
| 13 | 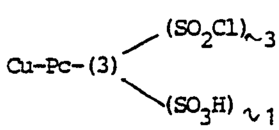 | 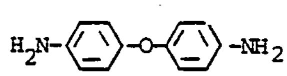 | 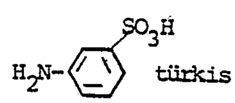 | türkis |
| 14 | " | 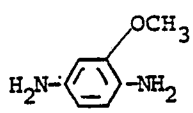 | 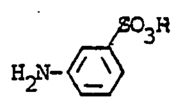 | " |
| 15 | " | 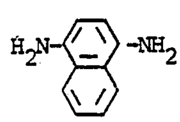 | 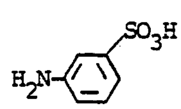 | " |
| 16 | " | 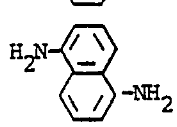 | 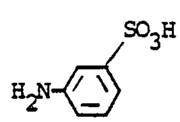 | " |

(Fortsetzung)

| Beispiel | A* | B* ($R_IHN-B-NHR_{II}$) | C* ($Ar-NH_2$) | Farbton |
|---|---|---|---|---|
| 17 | " | 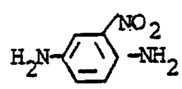 | 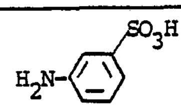 | oliv-grün |
| 18 | Ni-Pc-(3) $(SO_2Cl)\sim3$ $(SO_3H)\sim1$ | 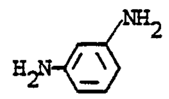 | 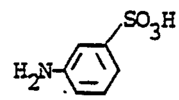 | grün-stichig türkis |
| 19 | Cu-Pc-(3) $(SO_2Cl)_{2,5}$ $(SO_3H)_1$ | 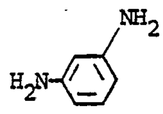 | 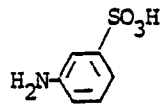 | türkis-blau |
| 20 | Cu-Pc-(3) $(SO_2Cl)\sim2$ $(SO_3H)\sim1$ | 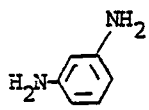 | 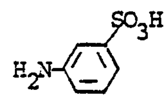 | " |
| 21 | Cu-Pc-(4) $(SO_2Cl)\sim3$ $(SO_3H)\sim1$ | 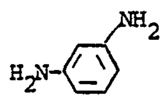 | 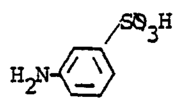 | " |
| 22 | Cu-Pc-(4)-$(SO_2Cl)_4$ | 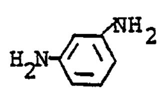 | 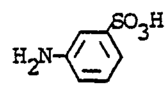 | türkis-blau |
| 23 | Cu-Pc-(3)-$(SO_2Cl)_4$ | 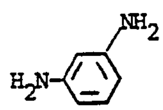 | 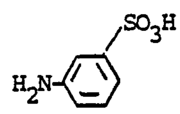 | türkis-blau |

Beispiel 24

In 110 ml Wasser und 10 ml 4 %iger Natronlauge werden 7,3 g Metanilsäure suspendiert. Man läßt unter gutem Rühren bei 0°-3 °C in 15 Minuten 3,4 ml (= 5,15 g) 2,4,6-Trifluor-1,3,5-triazin zutropfen und hält hierbei den pH-Wert der entstehenden Lösung bei 3,2 bis 3,8 durch Zugabe von Sodalösung. Die Lösung wird 15 Minuten bei 0°-3 °C nachgerührt.

Nun läßt man innerhalb von 10 Minuten eine Lösung von 2,6 g Phenylendiamin-1,3 in 50 ml Wasser und 21 ml 1n-Salzsäure zu obiger Lösung zulaufen, stellt den pH-Wert mit Sodalösung auf 4,5 und rührt bei diesem pH-Wert 2 Stunden bei 0°-3 °C.

In diese Amin-Lösung wird bei 0 °C-3 °C eine wäßrige Paste von 2/100 Mol Nickelphthalocyanin-(3, 3', 3'', 3''')-tetrasulfonsäurechlorid-sulfonsäure (enthaltend etwa 1,2 $SO_3H$-Gruppen) eingetragen. Hierauf stellt man den pH-Wert der Suspension mit Natronlauge auf 10,0 ein. Man rührt anfangs bei 0°-5 °C, später bei 20°-25 °C bis zur Beendigung der Reaktion. Hierauf salzt man den Farbstoff in einem pH-Bereich von 6 bis 7 aus, saugt ab und wäscht kurz mit verdünnter NaCl-Lösung. Nach Vermischen mit etwas Phosphat-Puffer (pH etwa 6,8) wird bei 50°-60 °C getrocknet. Man erhält in sehr guter Ausbeute den Farbstoff, der in Form seiner freien Säure der Formel

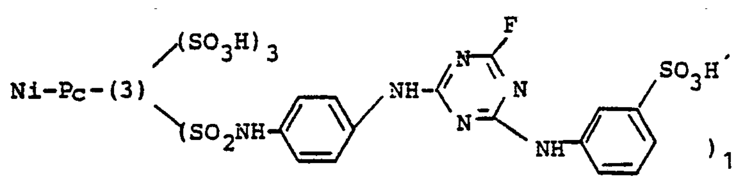

entspricht. Er färbt Baumwolle in klaren blaustichig grünen Tönen von ausgezeichneten Echtheiten.

Das in Absatz 3 genannte Nickelphthalocyanin-Derivat wird durch Behandeln von Nickelphthalocyanin mit Chlorsulfonsäure bei 137 °C erhalten. Zur Isolierung wird die Chlorsulfonsäure-Schmelze auf Eis ausgetragen, das Nickelphthalocyanin-Derivat abgesaugt und mit eiskalter 1 %iger Salzsäure gewaschen.

Verfährt man analog Beispiel 24 und ersetzt die in Absatz 3 genannte Nickelphthalocyaninsulfochlorid-sulfonsäure durch das in Spalte A* der nachfolgenden Tabelle genannte Phthalocyanin-Derivat, das in Absatz 2 verwendete Phenylendiamin-1,3 durch das in Spalte B* genannte Diamin, sowie die in Absatz 1 erwähnte Metanilsäure durch die in Spalte C* dieser Tabelle genannte Verbindung, so erhält man Farbstoffe, die in Form ihrer freien Säuren der allgemeinen Formel

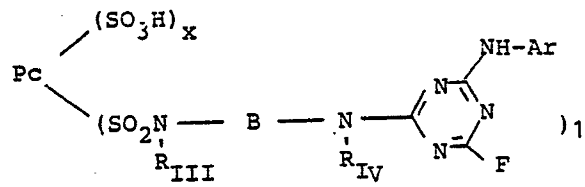

wobei $R_{III}$ und $R_{IV}$ Wasserstoff, Methyl oder Ethyl darstellen,

x = 1 bis 3,

die Baumwolle in den in der Tabelle angegebenen Tönen färben. Die Färbungen besitzen ausgezeichnete Echtheiten.

| Beispiel | A* | B* ($R_{III}HN$-B-$NHR_{IV}$) | C* (Ar-$NH_2$) | Farbton |
|---|---|---|---|---|
| 25 | Ni-Pc-(3) $(SO_2Cl)_{1,7}$ $(SO_3H)_{1,6}$ | 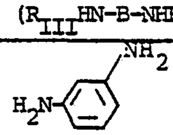 | 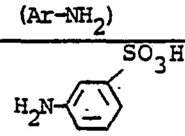 | blaugrün |
| 26 | Ni-Pc-(3) $(SO_2Cl)_{2,1}$ $(SO_3H)_{1,3}$ | " | " | " |
| 27 | Ni-Pc-(3) $(SO_2Cl)_{1,9}$ $(SO_3H)_{1,0}$ | 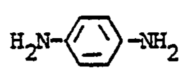 | " | " |
| 28 | Ni-Pc-(3) $(SO_2Cl)_{1,7}$ $(SO_3H)_{0.9}$ | " | " | " |
| 29 | Ni-Pc-(3) $(SO_2Cl)_{1,4}$ $(SO_3H)_{0,9}$ | 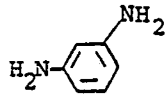 | 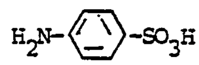 | " |
| 30 | Cu-Pc-(3) $(SO_2Cl)_3$ $(SO_3H)_1$ | " | " | türkis |

(Fortsetzung)

| Beispiel | A* | B* $(R_{III}HN\text{-}B\text{-}NHR_{IV})$ | C* $(Ar\text{-}NH_2)$ | Farbton |
|---|---|---|---|---|
| 31 | Cu-Pc-(3) $(SO_2Cl)_{2,3}$ $(SO_3H)_{1,0}$ | 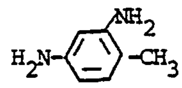 | 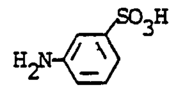 | türkis |
| 32 | Cu-Pc-(3) $(SO_2Cl)_{2,0}$ $(SO_3H)_{0,9}$ | 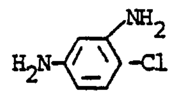 | " | " |
| 33 | Cu-Pc-(3) $(SO_2Cl)_{1,7}$ $(SO_3H)_{0,9}$ | 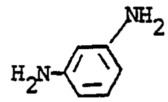 | 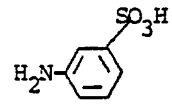 | " |
| 34 | Cu-Pc-(3) $(SO_2Cl)_{2,6}$ $(SO_3H)_{0,8}$ | 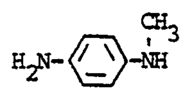 | 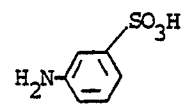 | " |
| 35 | Cu-Pc-(3) $(SO_2Cl)_{1,3}$ $(SO_3H)_{0,8}$ | 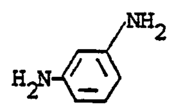 | 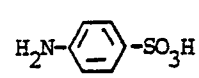 | " |
| 36 | Cu-Pc-(3) $(SO_2Cl)_{1,7}$ $(SO_3H)_{0,9}$ | 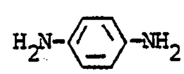 | 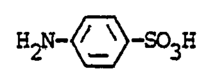 | " |
| 37 | Ni-Pc-(3) $(SO_2Cl)_{1,9}$ $(SO_3H)_{1,0}$ | 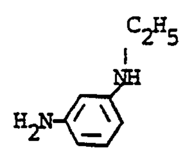 | 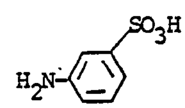 | blaugrün |
| 38 | Cu-Pc-(3) $(SO_2Cl)_{2,0}$ $(SO_3H)_{0,9}$ | 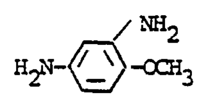 | 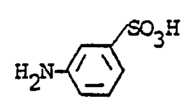 | türkis |
| 39 | Ni-Pc-(3) $(SO_2Cl)_{2,1}$ $(SO_3H)_{1,3}$ | 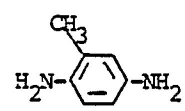 | 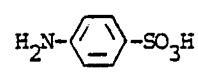 | blaugrün |

Beispiel 40

In 100 ml Wasser werden 4,85 g Anilin-3-sulfonsäure bei 0° bei pH 3,5 gelöst. Unter gutem Rühren läßt man bei 0°-3 °C innerhalb von 10 Minuten eine Lösung von 4,8 g 2,4,6-Trichlor-1,3,5-triazin in 20 ml Aceton zutropfen und hält hierbei pH-Wert der entstehenden Lösung durch Zugabe von Sodalösung den pH-Wert bei 3,2 bis 3,8. Die Lösung wird 15 Minuten bei 0°-3 °C nachgerührt.

Nun läßt man innerhalb von 10 Minuten eine Lösung von 2,3 g Phenylendiamin-1,3 in 50 ml Wasser und 21 ml 1n-Salzsäure zu obiger Lösung zulaufen, stellt den pH-Wert auf 4,5 ein und rührt 2 Stunden bei 0°-3 °C.

In diese Amin-Lösung wird bei 0°-3 °C eine wäßrige Paste von 2/100 Mol Kupferphthalocyanin-/3, 3', 3'', 3''')-tetrasulfonsäurechlorid-sulfonsäure (enthaltend etwa eine $SO_3H$-Gruppe) eingetragen. Hierauf rührt man 30 ml einer 1n-$NH_3$-Lösung ein und stellt den pH-Wert mit Natronlauge auf 10. Man rührt anfangs bei 0°-5 °C, steigert dann die Temperatur auf 20 °C-25 °C und rührt bei dieser Temperatur bis zur Beedigung der Reaktion. Man salzt den Farbstoff bei pH 7 aus, saugt ab und wäscht kurz mit verdünnter NaCl oder KCl-Lösung. Nach Vermischen mit etwas Phosphat-Puffer (pH etwa 6,8) wird bei 50°-60 °C getrocknet. Man erhält in sehr guter Ausbeute den Farbstoff, der in Form seiner freien Säure der Formel

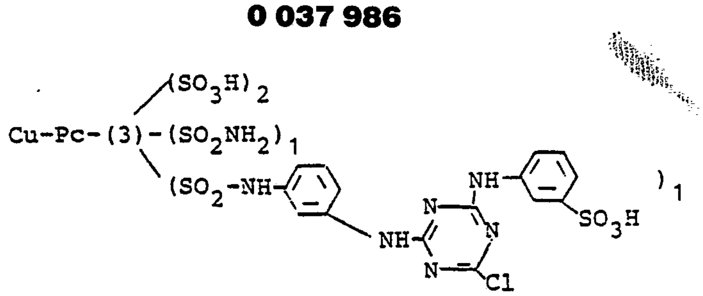

entspricht. Er druckt Baumwolle in klaren türkisblauen Tönen von ausgezeichneten Echtheiten.

Das in Absatz 3 genannte Kupferphthalocyanin-Derivat wird durch Behandeln von Kupferphthalocyanin mit Chlorsulfonsäure und etwas Thionylchlorid bei 139 °C erhalten. Zur Isolierung wird die Chlorsulfonsäure-Schmelze auf Eis ausgetragen, das Kupferphthalocyanin-Derivat abgesaugt und mit eiskalter etwa 1 %iger Salzsäure gewaschen.

Verfährt man analog Beispiel 40 und ersetzt die in Absatz 1 genannte Anilin-3-sulfonsäure durch die in Spalte C* der nachfolgenden Tabelle genannte Verbindung, das in Absatz 2 genannte Phenylendiamin-1,3 durch das in Spalte B*der nachfolgenden Tabelle genannte Diamin, sowie die in Absatz 3 genannte Kupferphthalocyanin-sulfochlorid-sulfonsäure durch das in Spalte A* dieser Tabelle genannte Phthalocyanin-Derivat, so erhält man Farbstoffe der allgemeinen Formel

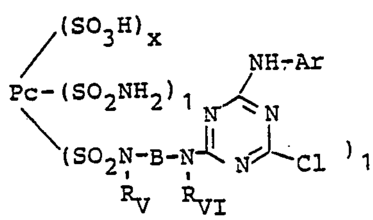

wobei $R_V$ und $R_{VI}$ Wasserstoff, Methyl oder Ethyl darstellen, und x = 1 bis 2 die Baumwolle in türkisblauen bis blaugrünen Tönen mit ausgezeichneten Echtheiten drucken.

| Beispiel | A* | B* ($HR_VN-B-NR_{VI}H$) | C* ($Ar-NH_2$) | Farbton |
|---|---|---|---|---|
| 41 | 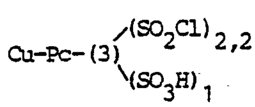 | 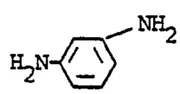 | 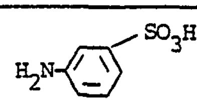 | türkisblau |
| 42 | 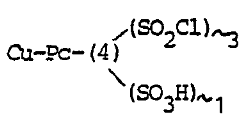 | 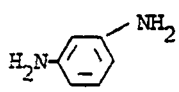 | 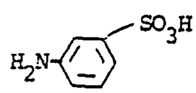 | türkisblau |
| 43 | 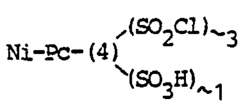 | 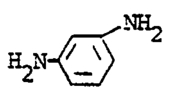 | 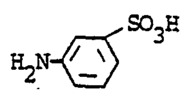 | türkis |
| 44 | 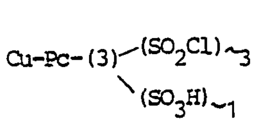 | 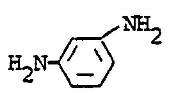 | 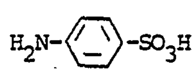 | türkis |
| 45 | 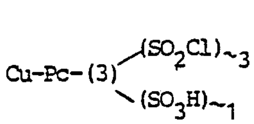 | 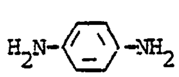 | 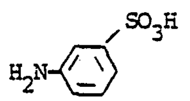 | türkis |
| 46 | 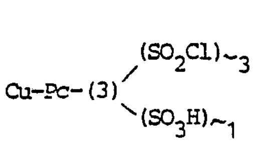 | 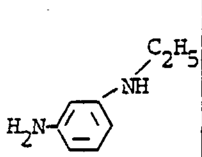 | 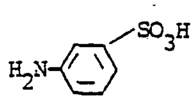 | türkisblau |

(Fortsetzung)

| Beispiel | A* | B* ($HR_V N-B-NR_{VI} H$) | C* ($Ar-NH_2$) | Farbton |
|---|---|---|---|---|
| 47 | 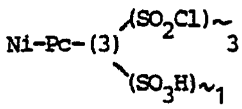 | 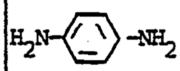 | 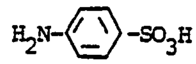 | türkis |
| 48 | 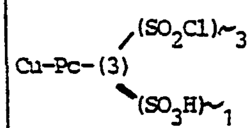 | 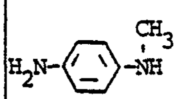 | 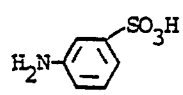 | türkis |

Verfährt man ähnlich Beispiel 40, arbeitet jedoch ohne Zusatz von Ammoniak und ersetzt die in Absatz 1 genannte Anilin-3-sulfonsäure durch die in Spalte C* der nachfolgenden Tabelle genannte Verbindung $Ar—NH_2$, das in Absatz 2 genannte Phenylendiamin-1,3 durch das in Spalte B* der nachfolgenden Tabelle erwähnte Diamin, sowie die Kupferphthalocyaninsulfochlorid-sulfonsäure in Absatz 3 durch das in Spalte A* dieser Tabelle stehende Phthalocyanin-Derivat, so erhält man Farbstoffe der allgemeinen Formel

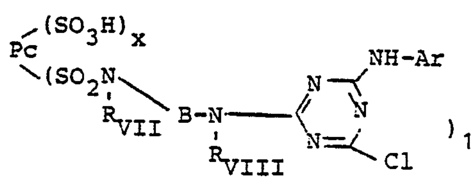

wobei $R_{VII}$ und $R_{VIII}$ Wasserstoff oder Methyl darstellen,
x = 1 bis 3.

Die Farbstoffe drucken Baumwolle in türkisblauen bis blaugrünen Tönen mit ausgezeichneten Echtheiten.

| Beispiel | A* | B* ($HR_{VII}-N-B-NH_{VIII}H$) | C* ($Ar-NH_2$) | Farbton |
|---|---|---|---|---|
| 49 | 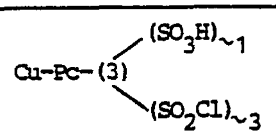 | 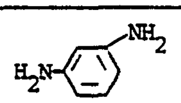 | 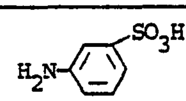 | türkis |
| 50 | 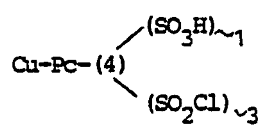 | 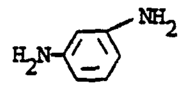 | 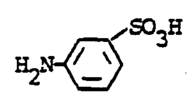 | türkis-blau |
| 51 | 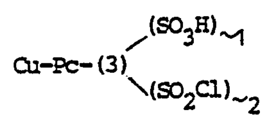 | 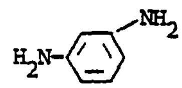 | 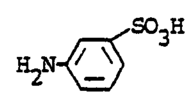 | türkis-blau |
| 52 | 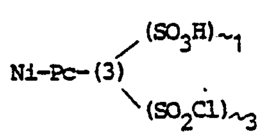 | 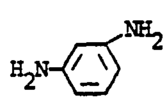 | 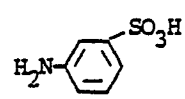 | blau-grün |

(Fortsetzung)

| Beispiel | A* | B* ($HR_{VII}$-N-B-$NH_{VIII}$H) | C* (Ar-$NH_2$) | Farbton |
|---|---|---|---|---|
| 53 | Ni-Pc-(3) $(SO_3H)_{\sim 1}$ $(SO_2Cl)_{\sim 2}$ | 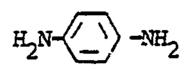 | 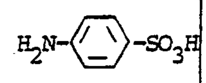 | blaugrün |
| 54 | Cu-Pc-(3) $(SO_3H)_{\sim 1}$ $(SO_2Cl)_{\sim 3}$ | 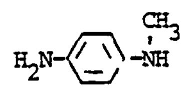 | 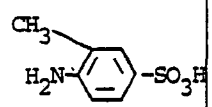 | türkis |
| 55 | Ni-Pc-(3) $(SO_3H)_{1,2}$ $(SO_2Cl)_{2,3}$ | 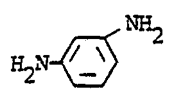 | 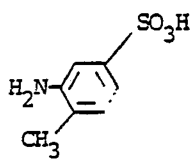 | blaugrün |
| 56 | Ni-Pc-(3) $(SO_3H)_{\sim 1}$ $(SO_2Cl)_{\sim 2}$ | 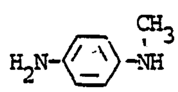 | 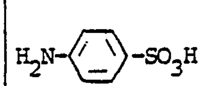 | blaugrün |

Beispiel 57

In 150 ml Wasser werden 9,4 g Metanilsäure suspendiert und bei 0 °C auf einen pH-Wert von 3,5 eingestellt. Man läßt unter gutem Rühren bei 0°-3 °C in 15 Minuten 4,3 ml (= 6,55 g) 2,4,6-Trifluor-1,3,5-triazin zutropfen und hält hierbei den pH-Wert der entstehenden Lösung durch Zugabe von Sodalösung bei 3,2 bis 3,8. Die Lösung wird 15 Minuten bei 0°-3 °C nachgerührt.

Nun läßt man innerhalb von 10 Minuten eine Lösung von 3,5 g Phenylendiamin-1,3 und 32 ml 1n-Salzsäure in 80 ml Wasser zu obiger Lösung zulaufen, stellt den pH-Wert mit Sodalösung auf 4,5 und rührt bei diesem pH-Wert 2 Std. bei 0°-3 °C.

In diese Amin-Lösung wird bei 0°-3 °C eine wäßrige Paste von 2/100 Mol Nickelphthalocyanin-(3, 3', 3'',3''')-tetrasulfonsäurechlorid-sulfonsäure (enthaltend etwa 1,2 $SO_3H$-Gruppen/Ni-Pc) eingerührt. Hierauf stellt man den pH-Wert der Suspension mit Natronlauge auf 9,5 ein. Man rührt anfangs bei 0°-5 °C, später bei 20°-25 °C bis zur Beendigung der Reaktion. Hierauf salzt man den Farbstoff in einem pH-Bereich von 6-7 aus, saugt ab und wäscht kurz mit verdünnter NaCl-Lösung. Nach Vermischen mit etwas Phosphat-Puffer (pH etwa 6,8) wird bei 50°-60 °C getrocknet. Man erhält in sehr guter Ausbeute den Farbstoff, der in Form seiner freien Säure der Formel

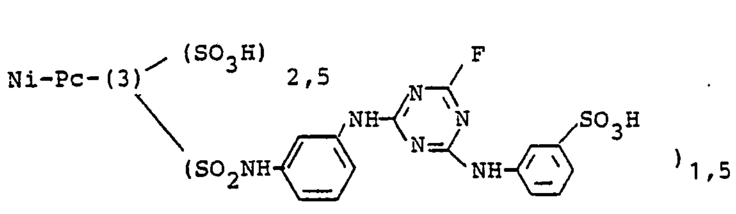

entspricht. Er färbt Baumwolle in klaren blaustichig grünen Tönen von ausgezeichneten Echtheiten.

Das in Absatz 3 genannte Nickelphthalocyanin-Derivat wird durch Behandeln von Nickelphthalocyanin mit Chlorsulfonsäure bei 140 °C erhalten. Zur Isolierung wird die Chlorsulfonsäure-Schmelze auf Eis ausgetragen, das Nickelphthalocyanin-Derivat abgesaugt und mit eiskalter 1 %iger Salzsäure gewaschen.

Verfährt man analog Beispiel 57 und ersetzt die in Absatz 3 genannte Nickelphthalocyaninsulfochloridsulfonsäure durch das in Spalte A* der nachfolgenden Tabelle genannte Phthalocyanin-Derivat, das in Absatz 2 verwendete Phenylendiamin-1,3 durch das in Spalte B* genannte Diamin sowie die in Absatz 1 erwähnte Metanilsäure durch die in Spalte C* dieser Tabelle genannte Verbindung, so erhält man Farbstoffe, die in Form ihrer freien Sulfonsäuren der allgemeinen Formel

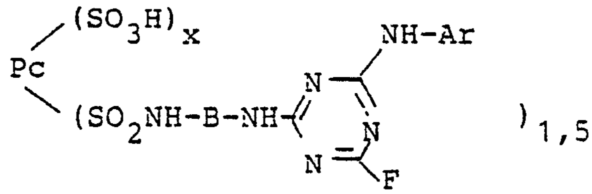

entsprechen,
wobei x = 1 bis 2,5 bedeutet.

Die Verbindungen färben Baumwolle in den in der Tabelle angegebenen Tönen. Die Färbungen besitzen sehr gute Echtheiten.

| Beispiel | A* | B* ($H_2N-B-NH_2$) | C* ($Ar-NH_2$) | Farbton |
|---|---|---|---|---|
| 58 | 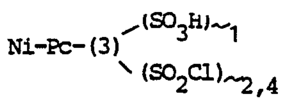 | 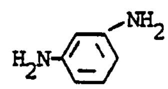 | 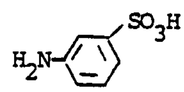 | blaugrün |
| 59 | 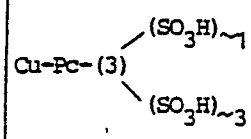 | 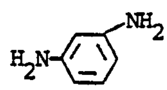 | 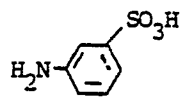 | türkis |
| 60 | 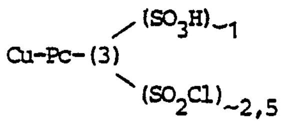 | 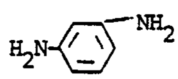 | 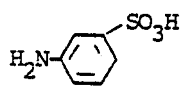 | türkis |
| 61 | 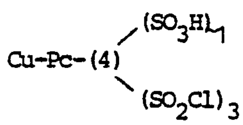 | 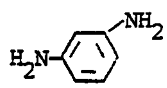 | 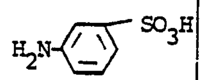 | türkisblau |
| 62 | 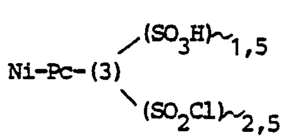 | 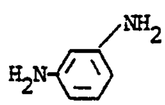 | 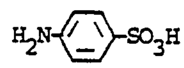 | blaugrün |
| 63 | 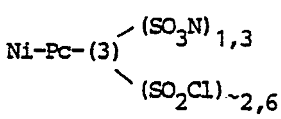 | 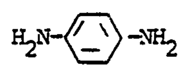 | 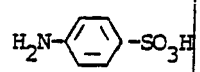 | blaugrün |
| 64 | 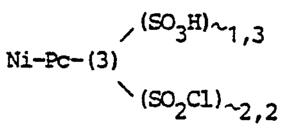 | 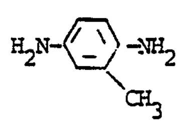 | 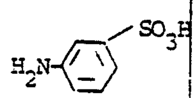 | blaugrün |
| 65 | 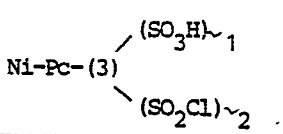 | 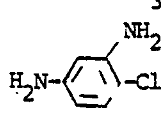 | 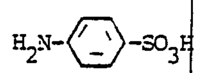 | blaugrün |

Beispiel 66

Man arbeitet analog Beispiel 57, setzt jedoch anstelle der in Absatz 3 verwendenten 2/100 Mol nur 1,

5/100 Mol Nickelphthalocyanin-(3, 3',3'',3''')-tetrasulfonsäurechlorid-sulfonsäure ein, so erhält man den Farbstoff, der in Form seiner freien Säure der Formel

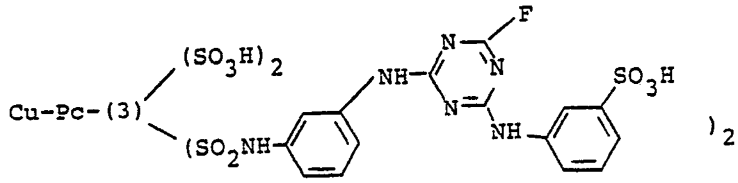

entspricht. Er färbt Baumwolle in klaren blaustichig grünen Tönen von ausgezeichneten Echtheiten.

In analoger Weise werden bei Einsatz von 1,5/100 Mol Kupferphthalocyanin-(3, 3',3'',3''')-tetrasulfonsäurechlorid-sulfonsäure und Kupferphthalocyanin-4,4',4'',4''')-Tetrasulfonsäurechloridsulfonsäure die Farbstoffe erhalten, die in Form ihrer freien Säuren den Formeln

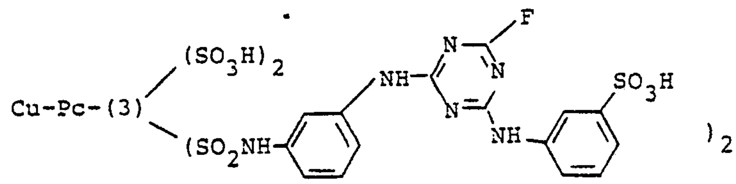

und

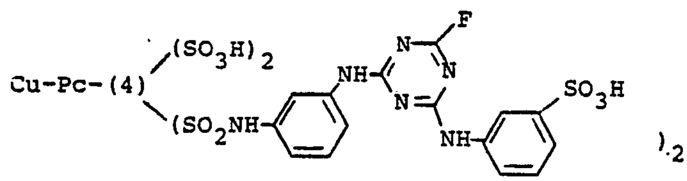

entsprechen. Sie färben Baumwolle in türkisen bzw. türkisblauen Tönen vor sehr guten Echtheiten.

Färbebeispiel 1

In einem Färbebecher von 500 ml Inhalt, der sich in einem beheizbaren Wasserbad befindet, werden 220 ml Wasser von 20-25 °C vorgelegt. Man teigt 0,3 g Farbstoff, erhalten nach Beispiel 1, Absatz 3 mit 2 ml kaltem Wasser gut an und fügt 48 ml heißes Wasser (70 °C) zu. Die Farbstofflösung mit einem pH-Wert von 7-8 wird dem vorgelegten Wasser zugegeben, wobei 10 g Baumwollgarn in dieser Färbeflotte ständig in Bewegung gehalten werden. Innerhalb von 10 Minuten erhöht man die Temperatur der Färbeflotte auf 60 °C, setzt 15 g Natriumsulfat (wasserfrei) zu und färbt 30 Minuten weiter. Dann fügt man der Färbeflotte 2 g Natriumcarbonat zu und färbt 60 Minuten bei 60 °C. Man entnimmt dann das gefärbte Material der Färbeflotte, entfernt die anhaftende Flotte durch Auswringen oder Abpressen und spült das Material gründlich zunächst mit kaltem Wasser und dann mit heißem Wasser so lange, bis die Spülflotte nicht mehr angeblutet wird. Anschließend wird das gefärbte Material in 500 ml einer Flotte, die 0,5 g Natriumalkylsulfonat enthält, 20 Minuten lang bei Siedetemperatur geseift, erneut gespült und bei 60-70 °C in einem Trockenschrank getrocknet. Die Baumwolle wird in naßechtem, klarem und türkisblauem Ton angefärbt.

Färbebeispiel 2

3 g Farbstoff, den man nach Beispiel 1 Absatz 3 erhält, werden mit 5 g Harnstoff und 1 g m-Nitrobenzolsulfonsaurem Natrium verrührt, mit 10 ml Wasser von 20-25 °C gut angeteigt und mit 80 ml Wasser von 20 °C unter Umrühren bei pH 7-8 gelöst. Zu dieser Lösung gibt man 20 ml einer 10 %igen Natriumcarbonat-Lösung. Mit der so erhaltenen Klotzflotte werden 20 g Baumwoll-Gewebe auf einem Laborfoulard geklotzt, dessen Walzen mit einem solchen Druck aufeinandergepreßt sind, daß die Flottenaufnahme des Baumwollgewebes ca. 80 % seines Trockengewichtes beträgt. Das so geklotzte Gewebe wird auf einem Spannrahmen aufgespannt und im Trockenschrank während 15 Minuten bei 60-70 °C getrocknet und anschließend 3 Minuten bei 102 °C gedämpft. Man spült dann das gefärbte Material gründlich, zunächst mit kaltem Wasser und dann mit heißem Wasser so lange, bis die Spülflotte nicht mehr angeblutet wird. Anschließend wird das gefärbte Material in 500 ml einer Flotte, die 0,5 g Natriumalkylsulfonat enthält, 20 Minuten lang bei Siedetemperatur geseift, erneut gespült und bei 60-70 °C in einem Trockenschrank getrocknet.

Der Farbstoff ist in einem naßechten, klaren, türkisblauen Ton aufgezogen.

Färbebeispiel 3

Mit einem 20 g-Wollstrang wird bei 40 °C in ein Färbebad eingegangen, das aus
0,5 g Farbstoff, erhalten nach Beispiel 1, Absatz 3 (bei pH 7-8 gelöst),
3,0 g eines Polyglykolethers, hergestellt nach DAS 10 41 003, Beispiel 9,
5,0 g Natriumsulfat und
1,2 g Essigsäure 30 %ig pro Liter, besteht

und innerhalb 15 Minuten auf 80 °C erwärmt. Man hält das Bad bei dieser Temperatur etwa eine Stunde. Nach dem Spülen mit Wasser erhält man eine potting- und walkechte, türkisblaue Färbung.

Druckbeispiel

Ein Baumwollstück wird mit einer Druckpaste, bestehend aus 50 g Farbstoff des Beispiels 40, Absatz 3, 150 g Harnstoff, 20 g Natriumbicarbonat, 10 g m-Nitrobenzolsulfonsäurem Natrium, 450 g einer hochviskosen Alginatverdickung und 320 g Wasser, bedruckt und in einen Dämpfer, z. B. des Typs Mather-Platt, bei 103 °C gedämpft. Der Druck wird dann mit kaltem, dann mit heißem und schließlich wieder mit kaltem Wasser gespült. Man erhält einen naßechten, türkisblauen Druck.

**Ansprüche**

1. Verfahren zur Herstellung von Phthalocyaninfarbstoffen, deren freie Säuren der Formel

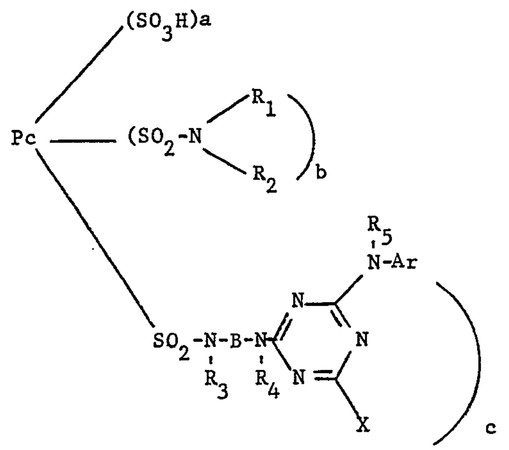

(I)

entsprechen, worin

Pc = Rest eines Kupfer- oder Nickel-Phthalocyanins

$R_1$, $R_2$ = Wasserstoff, gegebenenfalls substituiertes Alkyl oder worin $R_1$ und $R_2$ zusammen mit dem durch sie eingeschlossenen Stickstoffatom einen fünf- oder sechsgliedrigen heterocyclischen Ring bilden

und worin

$R_3$, $R_4$, $R_5$ = Wasserstoff oder gegebenenfalls substituiertes Alkyl,

Ar = durch mindestens eine $SO_3H$ und/oder COOH-Gruppe und gegebenenfalls zusätzlich durch Alkyl ($C_1$-$C_4$), Alkoxy ($C_1$-$C_6$), Halogen, Cyan, Nitro, Carbamoyl, Ureido ein- oder mehrfach substituiertes Phenyl oder Naphthyl,

B = gegebenenfalls substituiertes und mindestens einen aromatischen Rest enthaltendes Brückenglied,

X = Halogen,

a = 1 bis 3,

b = 0 bis 2,

c = 1 oder 2

und wobei die Summe (a + b + c) die Zahl 4 nicht übersteigen soll und von deren Mischungen, dadurch gekennzeichnet, daß man ohne Isolierung von Zwischenstufen nacheinander Trihalogen-triazine der Formel

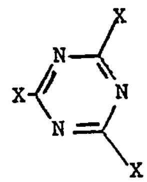

(II)

worin X die oben angegebene Bedeutung hat, zunächst mit einem Mol eines Amins der Formel

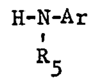

(III)

worin Ar und $R_5$ die oben angegebene Bedeutung haben, dann mit einem Mol Diamin der Formel

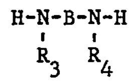

(IV)

worin B, $R_3$ und $R_4$ die oben angegebene Bedeutung haben, umsetzt und hierauf das erhaltene Zwischenprodukt ohne Isolierung, gegebenenfalls zusammen mit einem Amin der Formel

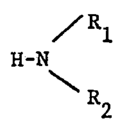

(V)

worin $R_1$ und $R_2$ die oben angegebene Bedeutung haben, mit einem Phthalocyanin-sulfochlorid der Formel

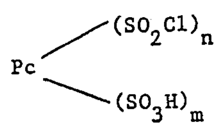

(VI)

worin Pc die oben angegebene Bedeutung besitzt,
m für 0 bis 2 und
n für 1 bis 4 steht,
wobei die Summe (m + n) die Zahl 4 nicht übersteigen soll, umsetzt und die Reaktionsprodukte, deren freie Säuren der Formel (I) entsprechen, nach an sich bekannten Methoden isoliert.

2. Verfahren zur Herstellung von Phthalocyanin-Farbstoffen der Formel (I) in Anspruch 1, wobei hier
Pc = Rest eines Kupfer- oder Nickelphthalocyanins
$R_1$, $R_2$, $R_3$, $R_4$ = Wasserstoff, Methyl oder Ethyl
$R_5$ = Wasserstoff
B = gegebenenfalls durch Alkyl ($C_1$-$C_4$), Alkoxy ($C_1$-$C_4$) oder Halogen substituiertes 1,3-Phenylen oder 1,4-Phenylen,
X = Fluor oder Chlor
Ar = gegebenenfalls durch Halogen, Methyl, Ethyl, Methoxy, $SO_3H$, COOH, substituiertes Phenyl oder Naphthyl, mit mindestens einer $SO_3H$- oder COOH-Gruppe,
a = 1-3
b = 0-2
c = 1-2 und
(a + b + c) = 2-4,
und deren Mischungen dadurch gekennzeichnet, daß man ohne Zwischenisolierung

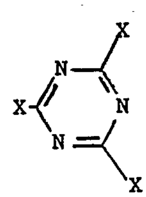

worin X = F oder Cl zunächst mit einer Verbindung der Formel

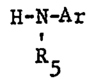

worin $R_5$ und Ar die obenangegebene Bedeutung haben und anschließend mit einem Diamin der Formel

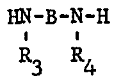

worin $R_3$, $R_4$ und B die oben angegebene Bedeutung haben, umsetzt und das entstandene Zwischenprodukt gegebenenfalls gemeinsam mit einem Amin der Formel

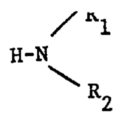

worin $R_1$ und $R_2$ die oben angegebene Bedeutung haben, mit einem Phthalocyanin-Derivat der Formel

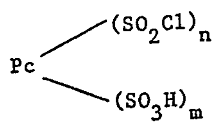

worin Pc die oben angegebene Bedeutung hat und m die Zahlen 0 bis 2, n die Zahlen 1 bis 4 bezeichnen, wobei die Summe von m und n nicht größer als 4 ist, umsetzt.

3. Verfahren zur Herstellung von Phthalocyanin-Farbstoffen der Formel (I) in Anspruch 1, wobei hier

Pc = Rest eines Kupfer- oder Nickelphthalocyanins

$R_1$, $R_2$, $R_3$, $R_4$ = Wasserstoff, Methyl oder Ethyl

$R_5$ = Wasserstoff

B = gegebenenfalls durch Alkyl ($C_1$-$C_4$), Alkoxy- ($C_1$-$C_4$) oder Halogen substituiertes 1,3-Phenylen oder 1,4-Phenylen,

X = Fluor oder Chlor

Ar = gegebenenfalls durch Halogen, Methyl, Ethyl, Methoxy, $SO_3H$ substituierter Phenylrest, mit mindestens einer $SO_3H$ Gruppe

$1 \leq a \leq 3$

$b > 0$

$c = 1$

$(a + b + c) = 3\text{-}4$

und deren Mischungen dadurch gekennzeichnet, daß man ohne Zwischenisolierung

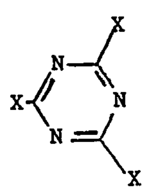

worin X = F oder Cl zunächst mit einer Verbindung der Formel

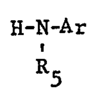

worin $R_5$ und Ar die obengenannte Bedeutung haben, anschließend mit einem Diamin der Formel

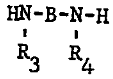

worin $R_3$, $R_4$ und B die oben angegebene Bedeutung haben, und das entstandene Zwischenprodukt gemeinsam mit einem Amin der Formel

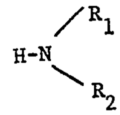

worin $R_1$ und $R_2$ die oben angegebene Bedeutung haben, mit einem Phthalocyanin-Derivat der Formel

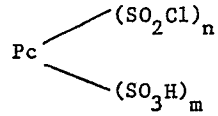

worin Pc die oben angegebene Bedeutung hat und m die Zahlen 0 bis 2, n die Zahlen 1 bis 4 bezeichnen, wobei die Summe von m und n nicht größer als 4 ist, umsetzt.

4. Verfahren zur Herstellung von Phthalocyanin-Farbstoffen der Formel (I) in Anspruch 1, wobei hier

Pc = Rest eines Kupfer- oder Nickelphthalocyanins

$R_3$, $R_4$ = Wasserstoff, Methyl, Ethyl

$R_5$ = Wasserstoff

B = gegebenenfalls durch Alkyl($C_1$-$C_4$), Alkoxy ($C_1$-$C_4$) oder Halogen substituiertes 1,3-Phenylen oder 1,4-Phenylen

X = Fluor oder Chlor

Ar = gegebenenfalls durch Halogen, Methyl, Ethyl, Methoxy, $SO_3H$ substituierter Phenylrest, mit mindestens einer $SO_3H$-Gruppe

a = 1-3

b = 0

c = 1-2

(a + b + c) = 2-4

und deren Mischungen, dadurch gekennzeichnet, daß man ohne Zwischenisolierung

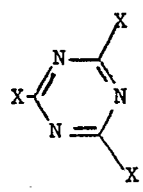

worin X = F oder Cl zunächst mit einer Verbindung der Formel

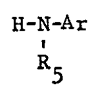

worin $R_5$ und Ar die obenangegebene Bedeutung haben, anschließend mit einem Diamin der Formel

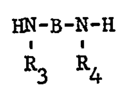

worin $R_3$, $R_4$ und B die oben angegebene Bedeutung haben, und das entstandene Zwischenprodukt mit einem Phthalocyanin-Derivat der Formel

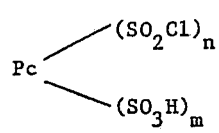

worin Pc die oben angegebene Bedeutung hat und m die Zahlen 0 bis 2, n die Zahlen 1 bis 4 bezeichnen, wobei die Summe von m und n nicht größer als 4 ist, umsetzt.

5. Verfahren zur Herstellung von Phthalocyanin-Farbstoffen der Formel (I) in Anspruch 1, wobei hier
Pc = Rest eines Kupfer- oder Nickel-Phthalocyanins
$R_1$, $R_2$, $R_3$, $R_4$ = Wasserstoff, Methyl-, Ethyl
$R_5$ = Wasserstoff
B = gegebenenfalls durch Alkyl($C_1$-$C_4$), Alkoxy($C_1$-$C_4$) oder Halogenatome substituiertes 1,3-Phenylen oder 1,4-Phenylen
X = Fluor oder Chlor
Ar = gegebenenfalls durch Halogen, Methyl, Ethyl, Methoxy, $SO_3H$ substituierter Phenylrest, mit mindestens einer $SO_3H$-Gruppe, welche in meta- oder para-Stellung zur $NR_5$Gruppe steht,
a = 1-3
b = 0-2
c = 1-2
(a + b + c) = 2-4
und deren Mischungen dadurch gekennzeichnet, daß man ohne Zwischenisolierung

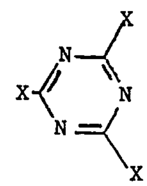

worin X = F oder Cl zunächst mit einer Verbindung der Formel

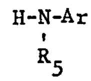

worin $R_5$ und Ar die oben angegebene Bedeutung haben, anschließend mit einem Diamin der Formel

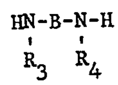

worin $R_3$, $R_4$ und B die oben angegebene Bedeutung haben, und das entstandene Zwischenprodukt gegebenenfalls gemeinsam mit einem Amin der Formel

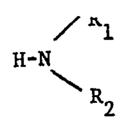

worin $R_1$ und $R_2$ die oben angegebene Bedeutung haben, mit einem Phthalocyanin-Derivat der Formel

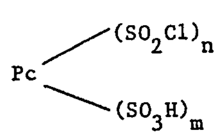

worin Pc die oben angegebene Bedeutung hat und m die Zahlen 0 bis 2, n die Zahlen 1 bis 4 bezeichnen, wobei die Summe von m und n nicht größer als 4 ist, umsetzt.

6. Verfahren zur Herstellung von Phthalocyanin-Farbstoffen der Formel (I) in Anspruch 1, wobei hier
Pc = Rest eines Kupfer- oder Nickel-Phthalocyanins
$R_1$, $R_2$, $R_3$, $R_4$ = Wasserstoff, Methyl-, Ethyl
$R_5$ = Wasserstoff
B = gegebenenfalls durch Alkyl($C_1$-$C_4$), Alkoxy($C_1$-$C_4$) oder Halogen substituiertes 1,3-Phenylen oder 1,4-Phenylen
X = Fluor
Ar = gegebenenfalls durch Halogen, Methyl, Ethyl, Methoxy, $SO_3H$ substituierter Phenylrest, mit

mindestens einer $SO_3H$-Gruppe, welche in meta- oder para-Stellung zur $NR_5$-Gruppe steht,

a = 1-3
b = 0-2
c = 1-2
(a + b + c) = 2-4

und deren Mischungen dadurch gekennzeichnet, daß man ohne Zwischenisolierung 2,4,6-Trifluor-1,3,5-triazin zunächst mit einer Verbindung der Formel

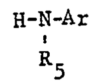

worin $R_5$ und Ar die oben angegebene Bedeutung haben, anschließend mit einem Diamin der Formel

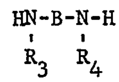

und das entstandene Zwischenprodukt gegebenenfalls gemeinsam mit einem Amin der Formel

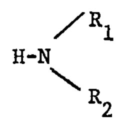

worin $R_1$ und $R_2$ die oben angegebene Bedeutung haben, mit einem Phthalocyanin-Derivat der Formel

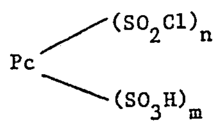

worin Pc die oben angegebene Bedeutung hat und m die Zahlen 0 bis 2, n die Zahlen 1 bis 4 bezeichnen, wobei die Summe von M und n nicht größer als 4 ist, umsetzt.

**Claims**

1. Process for the preparation of phthalocyanine dyestuffs, the free acids of which correspond to the formula

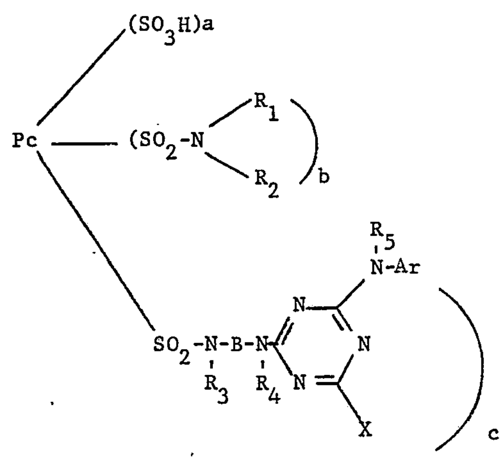

(I)

wherein

Pc = the radical of a copper phthalocyanine or nickel phthalocyanine,

$R_1$ and $R_2$ = hydrogen or optionally substituted alkyl, or wherein $R_1$ and $R_2$, together with the nitrogen atom between them form a five-membered or six-membered heterocyclic ring,

and wherein

$R_3$, $R_4$ and $R_5$ = hydrogen or optionally substituted alkyl,

Ar = phenyl or naphthyl which is monosubstituted or polysubstituted by at least one $SO_3H$ group and/or COOH group and optionally also by $C_1$-$C_4$-alkyl, $C_1$-$C_6$-alkoxy, halogen, cyano, nitro, carbamoyl or ureido,

B = an optionally substituted bridge member containing at least one aromatic radical,

X = halogen,

a = 1 to 3,

b = 0 to 2 and

c = 1 or 2,

and wherein the sum (a + b + c) should not exceed the number 4, and of mixtures thereof, characterised in that, successively and without isolating intermediate stages, trihalogeno-triazines of the formula

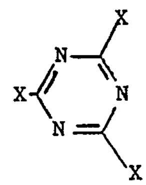

(II)

wherein X has the abovementioned meaning, are first reacted with one mol of an amine of the formula

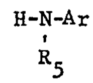

(III)

wherein Ar and $R_5$ have the abovementioned meaning, and then with one mol of a diamine of the formula

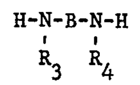

(IV)

wherein B, $R_3$ and $R_4$ have the abovementioned meaning, and the resulting intermediate product is then reacted, without being isolated and if appropriate together with an amine of the formula

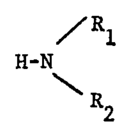

(V)

wherein $R_1$ and $R_2$ have the abovementioned meaning, with a phthalocyanine-sulphonic acid chloride of the formula

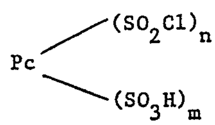

(VI)

wherein Pc has the abovementioned meaning,

m represents 0 to 2 and

n represents 1 to 4,

and wherein the sum (m + n) should not exceed the number 4, and the reaction products, the free acids of which correspond to the formula (I), are isolated by methods known per se.

2. Process for the preparation of phthalocyanine dyestuffs of the formula (I) in Claim 1, wherein, in this formula,

Pc = the radical of a copper phthalocyanine or nickel phthalocyanine,

$R_1$, $R_2$, $R_3$ and $R_4$ = hydrogen, methyl or ethyl,

$R_5$ = hydrogen,

B = 1,3-phenylene or 1,4-phenylene, optionally substituted by $C_1$-$C_4$-alkyl, $C_1$-$C_4$-alkoxy or halogen,

X = fluorine or chlorine,

Ar = phenyl or naphthyl which is optionally substituted by halogen, methyl, ethyl, methoxy, $SO_3H$ or COOH and has at least one $SO_3H$ group or COOH group,

a = 1-3,

b = 0-2

c = 1-2 and

(a + b + c) = 2-4,

and mixtures thereof, characterised in that, without intermediate isolation,

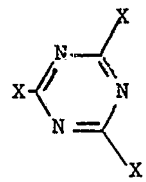

wherein X = F or Cl, is first reacted with a compound of the formula

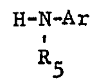

wherein $R_5$ and Ar have the abovementioned meaning, and then with a diamine of the formula

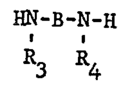

wherein $R_3$, $R_4$ and B have the abovementioned meaning, and the intermediate product formed is reacted, if appropriate together with an amine of the formula

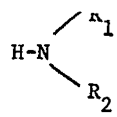

wherein $R_1$ and $R_2$ have the abovementioned meaning, with a phthalocyanine derivative of the formula

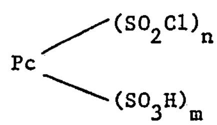

wherein Pc has the abovementioned meaning, m designates a number from 0 to 2 and n designates a number from 1 to 4, and wherein the sum of m and n is not greater than 4.

3. Process for the preparation of phthalocyanine dyestuffs of the formula (I) in Claim 1, wherein, in this formula,

Pc = the radical of a copper phthalocyanine or nickel phthalocyanine,

$R_1$, $R_2$, $R_3$ and $R_4$ = hydrogen, methyl or ethyl,

$R_5$ = hydrogen,

B = 1,3-phenylene or 1,4-phenylene, optionally substituted by $C_1$-$C_4$-alkyl, $C_1$-$C_4$-alkoxy or halogen,

X = fluorine or chlorine,

Ar = a phenyl radical which is optionally substituted by halogen, methyl, ethyl, methoxy or $SO_3H$ and has at least one $SO_3H$ group,

$1 \leqslant a \leqslant 3$

$b > 0$

$c = 1$

$(a + b + c) = 3\text{-}4$,

and of mixtures thereof, characterised in that, without intermediate isolation,

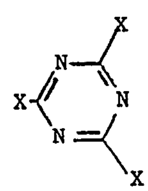

wherein X = F or Cl, is first reacted with a compound of the formula

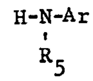

wherein $R_5$ and Ar have the abovementioned meaning, and then with a diamine of the formula

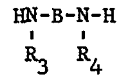

wherein $R_3$, $R_4$ and B have the abovementioned meaning, and the intermediate product formed is reacted together with an amine of the formula

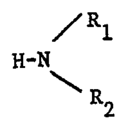

wherein $R_1$ and $R_2$ have the abovementioned meaning, with a phthalocyanine derivative of the formula

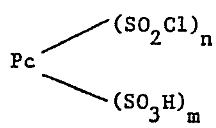

wherein Pc has the abovementioned meaning, m designates a number from 0 to 2 and n designates a number from 1 to 4, and wherein the sum of m and n is not greater than 4.

4. Process for the preparation of phthalocyanine dyestuffs of the formula (I) in Claim 1, wherein, in this formula,

Pc = the radical of a copper phthalocyanine or nickel phthalocyanine,

$R_3$ and $R_4$ = hydrogen, methyl or ethyl,

$R_5$ = hydrogen,

B = 1,3-phenylene or 1,4-phenylene, optionally substituted by $C_1$-$C_4$-alkyl, $C_1$-$C_4$-alkoxy or halogen,

X = fluorine or chlorine,

Ar = a phenyl radical which is optionally substituted by halogen, methyl, ethyl, methoxy or $SO_3H$ and has at least one $SO_3H$ group,

a = 1-3

b = 0

c = 1-2

(a + b + c) = 2-4

and of mixtures thereof, characterised in that, without intermediate isolation,

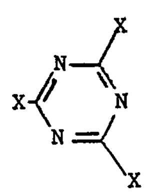

wherein X = F or Cl, is first reacted with a compound of the formula

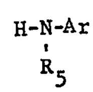

wherein $R_5$ and Ar have the abovementioned meaning, and then with a diamine of the formula

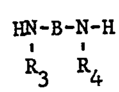

wherein $R_3$, $R_4$ and B have the abovementioned meaning, and the intermediate product formed is reacted with a phthalocyanine derivative of the formula

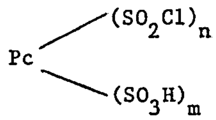

wherein Pc has the abovementioned meaning, m designates a number from 0 to 2 and n designates a number from 1 to 4, and wherein the sum of m and n is not greater than 4.

5. Process for the preparation of phthalocyanine dyestuffs of the formula (I) in Claim 1, wherein, in this formula,

Pc = the radical of a copper phthalocyanine or nickel phthalocyanine,

$R_1$, $R_2$, $R_3$ and $R_4$ = hydrogen, methyl or ethyl,

$R_5$ = hydrogen,

B denotes 1,3-phenylene or 1,4-phenylene, optionally substituted by $C_1$-$C_4$-alkyl, $C_1$-$C_4$-alkoxy or halogen atoms,

X = fluorine or chlorine,

Ar = a phenyl radical which is optionally substituted by halogen, methyl, ethyl, methoxy or $SO_3H$ and has at least one $SO_3H$ group in the meta-position or para-position relative to the $NR_5$ group,

a = 1-3

b = 0-2

c = 1-2

(a + b + c) = 2-4

and of mixtures thereof, characterised in that, without intermediate isolation,

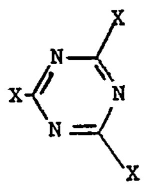

wherein X denotes F or Cl, is first reacted with a compound of the formula

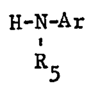

wherein $R_5$ and Ar have the abovementioned meaning, and then with a diamine of the formula

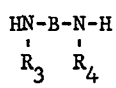

wherein $R_3$, $R_4$ and B have the abovementioned meaning, and the intermediate product formed is reacted, if appropriate together with an amine of the formula

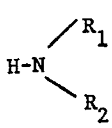

wherein $R_1$ and $R_2$ have the abovementioned meaning, with a phthalocyanine derivative of the formula

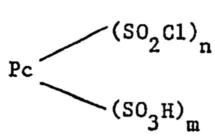

wherein Pc has the abovementioned meaning, m designates a number from 0 to 2 and n designates a number from 1 to 4, and wherein the sum of m and n is not greater than 4.

6. Process for the preparation of phthalocyanine dyestuffs of the formula (I) in Claim 1, wherein, in this formula,

Pc = the radical of a copper phthalocyanine or nickel phthalocyanine,

$R_1$, $R_2$, $R_3$ and $R_4$ = hydrogen, methyl or ethyl,

$R_5$ = hydrogen,

B = 1,3-phenylene or 1,4-phenylene, optionally substituted by $C_1$-$C_4$-alkyl, $C_1$-$C_4$ alkoxy or halogen,

X = fluorine,

Ar = a phenyl radical which is optionally substituted by halogen, methyl, ethyl, methoxy or $SO_3H$ and has at least one $SO_3H$ group in the meta-position or para-position relative to the $NR_5$ group,

a = 1-3

b = 0-2

c = 1-2

(a + b + c) = 2-4

and of mixtures thereof, characterised in that, without intermediate isolation, 2,4,6-trifluoro-1,3,5-triazine is first reacted with a compound of the formula

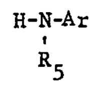

wherein $R_5$ and Ar have the abovementioned meaning, and then with a diamine of the formula

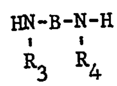

and the intermediate product formed is reacted, if appropriate together with an amine of the formula

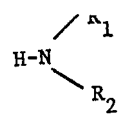

wherein $R_1$ and $R_2$ have the abovementioned meaning, with a phthalocyanine derivative of the formula

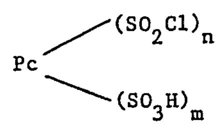

wherein Pc has the abovementioned meaning, m designates a number from 0 to 2 and n designates a number from 1 to 4, and wherein the sum of m and n is not greater than 4.

**Revendications**

1. Procédé de production de colorants de la série des phtalocyanines, dont les acides libres répondent à la formule

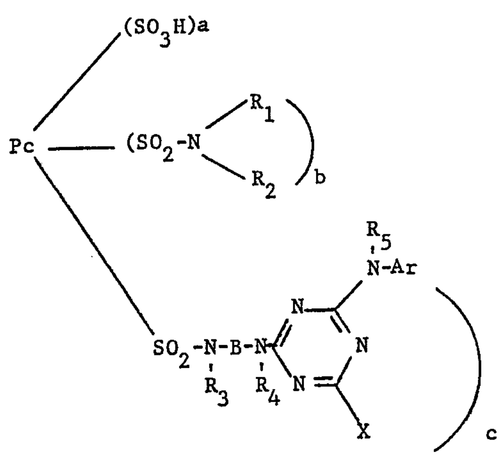

(I)

dans laquelle

Pc représente le radical d'une phtalocyanine de cuivre ou de nickel,

$R_1$ et $R_2$ représentent chacun un atome d'hydrogène, un groupe alkyle éventuellement substitué, ou bien $R_1$ et $R_2$, avec l'atome d'azote inclus entre eux, forment un noyau hétérocyclique pentagonal ou hexagonal, et

$R_3$, $R_4$ et $R_5$ sont chacun un atome d'hydrogène ou un groupe alkyle éventuellement substitué,

Ar représente un groupe phényle ou naphtyle, substitué par au moins un groupe $SO_3H$ et/ou COOH et éventuellement encore substitué une ou plusieurs fois par un groupe alkyle ($C_1$-$C_4$), alcoxy ($C_1$-$C_6$), par un atome d'halogène, par un groupe cyano, nitro, carbamoyle, uréido,

B représente un terme de pontage éventuellement substitué et comportant au moins un radical aromatique,

X est un halogène,

a vaut 1 à 3,

b vaut de 0 à 2,

c vaut 1 ou 2,

et la somme (a + b + c) ne doit pas excéder le nombre 4, et leurs mélanges, procédé caractérisé en ce que, sans isoler les produits des étapes intermédiaires, on fait successivement réagir des trihalogénotriazines de formule

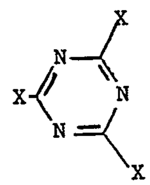

(II)

dans laquelle X a le sens indiqué ci-dessus, tout d'abord avec 1 mole d'une amine de formule

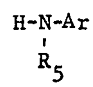

(III)

dans laquelle Ar et $R_5$ ont le sens indiqué ci-dessus, puis avec 1 mole de diamine de formule

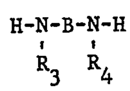

(IV)

dans laquelle B, $R_3$ et $R_4$ ont le sens indiqué ci-dessus, et l'on fait réagir le produit intermédiaire obtenu, sans l'isoler, éventuellement avec une amine de formule

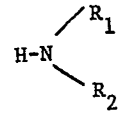

(V)

dans laquelle $R_1$ et $R_2$ ont le sens indiqué ci-dessus, avec un sulfochlorure de phtalocyanine de formule

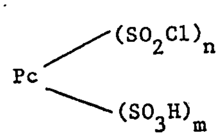

(VI)

dans laquelle Pc a le sens indiqué ci-dessus,

m vaut 0 à 2, et

n vaut 1 à 4,

la somme (m + n) ne devant pas excéder le nombre 4, et l'on isole, selon des méthodes connues en soi, les produits de réaction, dont les acides libres répondent à la formule (I).

2. Procédé de production de colorants de la série des phtalocyanines, de formule (I) selon la revendication 1, dans laquelle

Pc représente le radical d'une série de phtalocyanine de cuivre ou de nickel,

$R_1$, $R_2$, $R_3$, $R_4$ sont chacun un atome d'hydrogène ou un groupe méthyle ou éthyle,

$R_5$ est un atome d'hydrogène,

B représente un groupe 1,3-phénylène ou 1,4-phénylène, éventuellement substitué par un groupe alkyle ($C_1$-$C_4$), par un groupe alcoxy ($C_1$-$C_4$) ou par de l'halogène,

X représente du fluor ou du chlore,

Ar représente un groupe phényle ou naphtyle, éventuellement substitué par de l'halogène ou par un groupe méthyle, éthyle, méthoxy, $SO_3H$, COOH, et qui comporte au moins un groupe $SO_3H$ ou COOH,

a vaut 1 à 3,

b vaut 0 à 2,

c vaut 1 ou 2, et

la somme (a + b + c) vaut 2 à 4,

et leurs mélanges, procédé caractérisé en ce que, sans isolement intermédiaire, on fait réagir

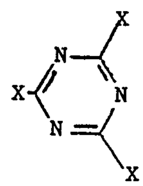

dans laquelle X représente F ou Cl, tout d'abord avec un composé de formule

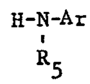

dans laquelle $R_5$ et Ar ont le sens précité, puis avec une diamine de formule

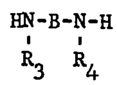

dans laquelle $R_3$, $R_4$ et b ont le sens indiqué ci-dessus, et l'on soumet le produit intermédiaire obtenu, éventuellement avec une amine de formule

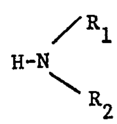

dans laquelle $R_1$ et $R_2$ ont le sens indiqué ci-dessus, à une réaction avec un dérivé de phtalocyanine de formule

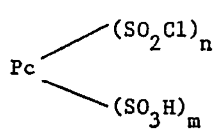

dans laquelle Pc a le sens indiqué ci-dessus, et m vaut de 0 à 2, n vaut de 1 à 4, la somme (m + n) ne devant pas être supérieure à 4.

3. Procédé de production de colorants de la série des phtalocyanines de formule (I) selon la revendication 1, dans laquelle

Pc représente le radical d'une phtalocyanine de cuivre ou de nickel,

$R_1$, $R_2$, $R_3$ et $R_4$ représentent chacun un atome d'hydrogène ou un groupe méthyle ou éthyle,

$R_5$ est un atome d'hydrogène,

B représente un groupe 1,3-phénylène ou 1,4-phénylène, éventuellement substitué par un groupe alkyle ($C_1$-$C_4$), alcoxy ($C_1$-$C_4$) ou par de l'halogène,

X représente le fluor ou le chlore,

Ar est un radical phényle, éventuellement substitué par de l'halogène ou par un groupe méthyle, éthyle, méthoxy ou $SO_3H$, et qui comporte au moins un groupe $SO_3H$,

$1 < a \leqslant 3$

$b > 0$
$c = 1$
la somme $(a + b + c)$ vaut 3 à 4,
et de leurs mélanges, procédé caractérisé en ce que, sans isolement intermédiaire, on fait réagir

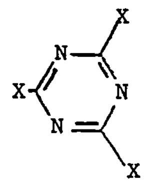

dans laquelle X représente F ou Cl, tout d'abord avec un composé de formule

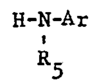

dans laquelle $R_5$ et Ar ont le sens précité, puis avec une diamine de formule

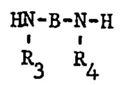

dans laquelle $R_3$, $R_4$ et B ont le sens indiqué ci-dessus, et l'on soumet le produit intermédiaire résultant, éventuellement avec une amine de formule

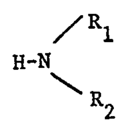

dans laquelle $R_1$ et $R_2$ ont le sens indiqué ci-dessus à une réaction avec un dérivé de phtalocyanine de formule

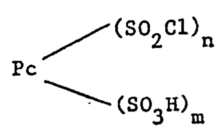

dans laquelle Pc a le sens indiqué ci-dessus et m vaut 0 à 2, n vaut 1 à 4, la somme $(m + n)$ n'étant pas supérieure à 4.

4. Procédé de production de colorants de la série des phtalocyanines de formule (I) selon la revendication 1, dans laquelle

Pc est le radical d'une phtalocyanine de cuivre ou de nickel,
$R_3$ et $R_4$ sont chacun un atome d'hydrogène ou un groupe méthyle ou éthyle,
$R_5$ est un atome d'hydrogène,
B est un groupe 1,3-phénylène ou 1,4-phénylène, éventuellement substitué par un groupe alkyle ($C_1$-$C_4$), alcoxy ($C_1$-$C_4$) ou par de l'halogène,
X est un atome de fluor ou de chlore,
Ar représente un radical phényle, éventuellement substitué par de l'halogène ou par un groupe méthyle, éthyle, méthoxy, $SO_3H$, et qui comporte au moins un groupe $SO_3H$,
a vaut 1 à 3,
b est nul,
c vaut 1 à 2,
la somme $(a + b + c)$ vaut 2 à 4,
et de leurs mélanges, caractérisé en ce que, sans isolement intermédiaire, on fait réagir

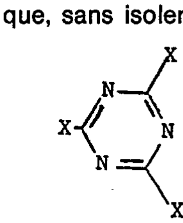

dans laquelle X représente F ou Cl, tout d'abord avec un composé de formule

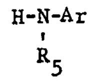

dans laquelle $R_5$ et Ar ont le sens précité, puis avec une diamine de formule

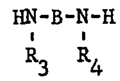

dans laquelle $R_3$, $R_4$ et B ont le sens indiqué ci-dessus, et l'on fait réagir le produit intermédiaire résultant avec un dérivé de phtalocyanine de formule

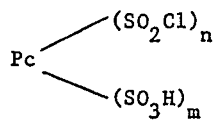

dans laquelle Pc a le sens indiqué ci-dessus, m vaut 0 à 2, n vaut 1 à 4, la somme (m + n) n'étant pas supérieure à 4.

5. Procédé de production de colorants de la série des phtalocyanines de formule (I) selon la revendication, dans laquelle

Pc est le radical d'une phtalocyanine de cuivre ou de nickel,

$R_1$, $R_2$, $R_3$, $R_4$ sont chacun un atome d'hydrogène ou un groupe méthyle ou éthyle,

$R_5$ est un atome d'hydrogène,

B est un groupe 1,3-phénylène ou 1,4-phénylène, éventuellement substitué par un groupe alkyle ($C_1$-$C_4$), alcoxy ($C_1$-$C_4$) ou par des atomes d'halogène,

X représente du fluor ou du chlore,

Ar est un radical phényle, éventuellement substitué par de l'halogène ou par un groupe méthyle, éthyle, méthoxy, $SO_3$, et qui comporte au moins un groupe $SO_3H$ se trouvant en position méta ou para par rapport au groupe $NR_5$,

a vaut 1 à 3,

b vaut 0 à 2,

c vaut 1 ou 2,

la somme (a + b + c) valant 2 à 4,

et de leurs mélanges, procédé caractérisé en ce que, sans isolement intermédiaire, on fait réagir

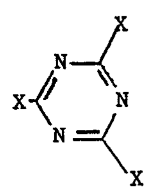

dans laquelle X représente F ou Cl, tout d'abord avec un composé de formule

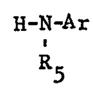

dans laquelle $R_5$ et Ar ont le sens indiqué ci-dessus, puis avec une diamine de formule

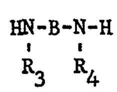

dans laquelle $R_3$, $R_4$ et B ont le sens indiqué ci-dessus, et l'on soumet le produit intermédiaire résultant, éventuellement avec une amine de formule

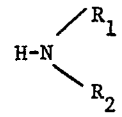

dans laquelle $R_1$ et $R_2$ ont le sens indiqué ci-dessus, à une réaction avec un dérivé de phtalocyanine de formule

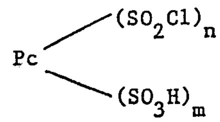

dans laquelle Pc a le sens indiqué ci-dessus, m vaut 0 à 2, n vaut 1 à 4 et la somme (m + n) n'est pas supérieure à 4.

6. Procédé de production de colorants de la série des phtalocyanines, répondant à la formule (I) selon la revendication 1, dans laquelle

Pc représente le radical d'une phtalocyanine de cuivre ou de nickel,

$R_1$, $R_2$, $R_3$ et $R_4$ sont chacun un atome d'hydrogène ou un groupe méthyle ou éthyle,

$R_5$ est un atome d'hydrogène,

B représente un groupe 1,3-phénylène ou 1,4-phénylène, éventuellement substitué par un groupe alkyle ($C_1$-$C_4$), alcoxy ($C_1$-$C_4$) ou par de l'halogène,

X est un atome de fluor,

Ar représente un radical phényle (éventuellement substitué par de l'halogène ou par un groupe méthyle, éthyle, méthoxy, $SO_3H$) et qui comporte au moins un groupe $SO_3H$ se trouvant en position méta ou para par rapport au groupe $NR_5$,

a vaut 1 à 3,

b vaut 0 à 2,

c vaut 1 ou 2,

la somme (a + b + c) vaut 2 à 4,

et de leurs mélanges, procédé caractérisé en ce que, sans isolement intermédiaire, on fait réagir la 2,4,6-trifluoro-1,3,5-triazine tout d'abord avec un composé de formule

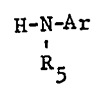

dans laquelle $R_5$ et Ar ont le sens indiqué ci-dessus, puis avec une diamine de formule

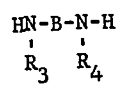

et l'on soumet le produit intermédiaire résultant, éventuellement avec une amine de formule

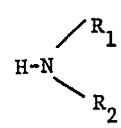

dans laquelle $R_1$ et $R_2$ ont le sens indiqué ci-dessus, à une réaction avec un dérivé de phtalocyanine de formule

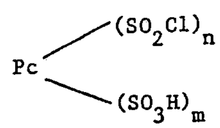

dans laquelle Pc a le sens indiqué ci-dessus, m valant de 0 à 2, n valant 1 à 4, et la somme (m + n) n'étant pas supérieure à 4.